(19) Europäisches Patentamt
European Patent Office
Office européen des brevets

(11) Publication number: **0 261 748 B1**

# (12) EUROPEAN PATENT SPECIFICATION

(45) Date of publication of patent specification: **26.08.92**

(51) Int. Cl.⁵: **C08L 77/00**, C08L 51/06, C08L 53/02, C08L 23/02, C08F 287/00

(21) Application number: **87201842.9**

(22) Date of filing: **25.09.87**

## (54) Impact resistant polymeric compositions and process for the preparation thereof.

(30) Priority: **25.09.86 US 911556**
**25.09.86 US 911558**
**25.09.86 US 911555**
**25.09.86 US 911557**
**25.09.86 US 911559**

(43) Date of publication of application:
**30.03.88 Bulletin 88/13**

(45) Publication of the grant of the patent:
**26.08.92 Bulletin 92/35**

(84) Designated Contracting States:
**AT BE CH DE ES FR GB IT LI NL SE**

(56) References cited:
**EP-A- 0 083 014**
**EP-A- 0 211 467**
**GB-A- 2 052 528**
**US-A- 4 174 358**
**EP-A- 0 173 380**
**FR-A- 2 344 594**
**US-A- 4 085 163**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Gelles, Richard**
**2152 Kirkwood No. 266**
**Houston Texas 77077(US)**
Inventor: **Lutz, Robert Gardiner**
**8322 Twining Oaks**
**Spring Texas 77379(US)**
Inventor: **Gergen, William Peter**
**11311 Hylander**
**Houston Texas 77007(US)**

EP 0 261 748 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an impact resistant polymeric composition, to a process for the preparation of said impact resistant polymeric composition, to a novel grafted block copolymer and to a process for the preparation of said novel grafted block copolymer.

It is known that a block copolymer can be obtained by an anionic copolymerization of a conjugated diene compound and an aromatic vinyl compound by using an organic alkali metal initiator. These types of block copolymers are diversified in characteristics, ranging from rubber-like characteristics to resin-like characteristics, depending on the content of the aromatic vinyl compound.

When the content of the aromatic vinyl compound is small, the produced block copolymer is a so-called thermoplastic rubber. It is a very useful polymer which shows rubber elasticity in the unvulcanized state and is appliable for various uses such as mouldings of shoe sole, impact modifiers for polystyrene resins, adhesives, and binders.

The block copolymers with a high aromatic vinyl compound content, such as more than 70% by weight, provide a resin possessing both excellent impact resistance and transparency, and such a resin is widely used in the field of packaging. Many proposals have been made on processes for the preparation of these types of block copolymers, for example as described in US-3,639,517.

The elastomeric properties of certain aromatic vinyl polymers also appear to be due in part to their degree of branching. While the aromatic vinyl polymers have a basic straight carbon chain backbone, those with elastomeric properties always have dependent alkyl radicals. For example, EPR (ethylene-propylene rubber) has a structure of dependent methyl radicals which appears to provide elasticity and other elastomeric properties. When an essentially unbranched straight chain polymer is formed, such as some polyethylenes, the resulting polymer is essentially non-elastomeric or in the other words relatively rigid, and behaves like a typical thermoplastic without possessing rubber-like resilience or high elongation, tensile strength without yield, low set or other properties characteristic of desirable elastomers.

Block copolymers have been produced, see U.S. Patent Re 27,145 which comprise primarily those having a general structure

A--B--A

wherein the two terminal polymer blocks A comprise thermoplastic polymer blocks of aromatic vinyl compounds such as polystyrene, while block B is a polymer block of a selectively hydrogenated conjugated diene. The proportion of the thermoplastic terminal blocks to the center elastomeric polymer block and the relative molecular weights of each of these blocks is balanced to obtain a rubber having an optimum combination of properties such that it behaves as a vulcanized rubber without requiring the actual step of vulcanization. Moreover, these block copolymers can be designed not only with this important advantage but also so as to be handled in thermoplastic forming equipment and are soluble in a variety of relatively low cost solvents.

While these block copolymers have a number of outstanding technical advantages, one of their principal limitations lies in their sensitivity to oxidation. This was due to their unsaturated character which can be minimized by hydrogenating the copolymer, especially in the center section comprising the polymeric diene block. Hydrogenation may be effected selectively as disclosed in U.S. Patent Re 27,145. These polymers are hydrogenated block copolymers having a configuration, prior to hydrogenation, of A-B-A wherein each of the A's is an alkenyl- substituted aromatic hydrocarbon polymer block and B is a butadiene polymer block wherein 35-55 mol per cent of the condensed butadiene units in the butadiene polymer block have 1,2 configuration.

These selectively hydrogenated ABA block copolymers are deficient in many applications in which adhesion is required due to its hydrocarbon nature. Examples include the toughening and compatibilization of polar polymers such as the engineering thermoplastics, the adhesion to high energy substrates of hydrogenated block copolymer elastomer based adhesives, sealants and coatings, and the use of hydrogenated elastomer in reinforced polymer systems. However, the placement onto the block copolymer of functional groups which can provide interactions not possible with hydrocarbon polymers solves the adhesion problem and extends the range of applicability of this material.

Functionalized S-EB-S polymer can be described as basically commercially produced S-EB-S polymers which are produced by hydrogenation of S-B-S polymer to which is chemically attached to either the styrene or the ethylene-butylene block, chemically functional moieties.

Many attempts have been made for the purpose of improving adhesiveness, green strength and other properties by modifying block copolymers with acid moieties and various methods have been proposed for modifying synthetic conjugated diene rubbers with acid moieties.

U.S. patent specification 4,292,414 concerns a method for the production of monovinyl aryl/conjugated

diene block copolymer having low 1,2 content grafted with maleic acid compounds. U.S. patent specification 4,427,828 concerns a process for producing an acid functionalized high 1,2 content block copolymer. However, both processes involve "ENE" type reaction which rely on residual unsaturation in the block copolymer for the addition of functional groups. It is not possible to produce functionalized block polymers which contain low residual unsaturation along with reasonable functionalization using the 'ENE' process.

Thermoplastic polyamides, such as nylon 66, are a class of materials which possess a good balance of properties comprising strength and stiffness which make them useful as structural materials. However, for a particular application, a thermoplastic polyamide may not offer the combination of properties desired, and therefore, means to correct this deficiency are of interest.

One major deficiency of thermoplastic polyamides is their poor resistance to impact, especially when dry. A particularly appealing route to achieving improved impact resistance in a thermoplastic is by blending it with another polymer. It is well known that stiff plastics can often be impact modified by addition of an immiscible low modulus elastomer. However, in general, physical blending of polymers has not been a successful route to toughen thermoplastic polyamides. This is due to the poor adhesion immiscible polymers typically exhibit with each other. As a result, interfaces between blend component domains represent areas of severe weaknesses, providing natural flows which result in facile mechanical failure.

It is well known to those skilled in the art that hydrogenated block copolymers of styrene and butadiene possess many of the properties which are required for impact modification of plastics. They have a low glass transition, low modulus rubber phase which is required for toughening. Because they contain little unsaturation, they can be blended with high temperature processing temperature plastics without degrading. In addition, they are unique compared to other rubbers in that they contain blocks which are microphase separated over the range of application and processing conditions. This microphase separation results in physical crosslinking, causing elasticity in the solid and molten stages. Such an internal strength mechanism is often required to achieve toughness in the application of plastic impact modification.

Blends comprising a polyamide, a selectively hydrogenated block copolymer of monoalkenyl arene and conjugated diene, and at least one dissimilar engineering thermoplastic resin, such as polypropylene, have been described in U.S. patent specification 4,085,163. In these ternary blends the selectively hydrogenated block copolymer serves as a compatibilizing agent for the other two components, because of its dual solubility nature for both polyamide and thermoplastic resin. In this way the polymer structure networks of the polyamide and the thermoplastic resin are interlocked by the selectively hydrogenated block copolymer.

Proof that hydrogenated block copolymers of styrene and butadiene are useful plastic impact modifiers can be seen in their widespread use for modifying polyolefins and polystyrene. For these blends, interfacial adhesion is great enough to achieve toughening.

Although the hydrogenated block copolymers do have many of the characteristics required for plastic impact modification, they are deficient in modifying many materials which are dissimilar in structure to styrene or hydrogenated butadiene. Blends of the hydrogenated block copolymer with dissimilar plastics are often not tough due to a lack of interfacial adhesion.

A route to achieve interfacial adhesion between dissimilar materials is by chemically attaching to one or more of the materials functional moieties which enhance their interaction. Such interactions include chemical reaction, hydrogen bonding, and dipole-dipole interactions.

U.S. patent specification 4,174,358 concerns a broad range of low modulus polyamide modifiers. However, this patent specification does not disclose or suggest the use of modified block copolymers of styrene and butadiene.

It has been previously proposed to increase the impact strength of polyamides by addition of a modified block copolymer. U.S. patent specification 4,427,828 and International Kokai Application No. WO83/00492 concern blends of thermoplastic polyamide with a modified block copolymer. These blends are deficient, however, because the blended components, especially the block copolymer, are relatively expensive. Also, polyamides have a tendency to absorb water and consequently properties are degraded. Blending polyolefins with polyamides would decrease the water absorption for the blend since a portion of the polyamide which absorbs water would be replaced by polyolefin which absorbs relatively little water. In the past attempts to extend impact modified polyamides with polyolefins have been unsuccessful because the polyamides were incompatible with the polyolefins.

It is an object of the present invention to obtain compositions having a desirable combination of properties such as impact strength, flexural modulus and elongation at break.

Another object is to produce functionalized block copolymers which contain low residual unsaturation and high functionality.

Accordingly, the invention provides an impact resistant polymeric composition characterized in that it comprises the following components:-

component (a) in the range of from 1 to 95 per cent by weight of a polyamide having a number average molecular weight of at least 5,000;

component (b) in the range of from 1 to 95 per cent by weight of a polyolefin, being a crystalline or crystallizable poly($\alpha$-olefin) or a copolymer thereof, and

component (c) in the range of from 1 to 50 per cent by weight of a selectively hydrogenated block copolymer having the general formula I:

$$B_n(AB)_oA_p \quad (I)$$

in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A constitute in the range of from 5 to 95 per cent by weight of the copolymer, the unsaturation of block B is less than 20% of the original unsaturation and the unsaturation of the blocks A is above 50% of the original unsaturation,

component (b) and/or component (c) being grafted with an acid compound or a derivative of an acid compound and component (c) also optionally being grafted with a polyolefin, the sum of the percentages of components (a), (b) and (c) being 100.

According to a prefered embodiment of the present invention compound (c) is and compound (b) is not grafted with an acid compound or a derivative of an acid compound.

According to another preferred embodiment component (b) is and component (c) is not grafted with an acid compound or a derivative of an acid compound.

According to a further preferred embodiment components (b) and (c) are both grafted with an acid compound or a derivative of an acid compound.

The polyamide matrix resin of the toughened compositions of this invention is well known in the art and embraces those semi-crystalline and amorphous resins having a molecular weight of at least 5000 and commonly referred to as nylons. Suitable polyamides include those described in U.S. patent specifications Nos. 2,071,250; 2,071,251; 2,130,523; 2,130,948; 2,241,322; 2,312,966; 2,512,606; and 3,393,210. The polyamide resin can be produced by condensation of equimolar amounts of a saturated dicarboxylic acid containing from 4 to 12 carbon atoms per molecule with a diamine, in which the diamine contains from 4 to 14 carbon atoms per molecule. Excess diamine can be employed to provide an excess of amine end groups over carboxyl end groups in the polyamide. Examples of polyamides include polyhexamethylene adipamide (nylon 66), polyhexamethylene azelaamide (nylon 69), polyhexamethylene sebacamide (nylon 610), polyhexamethylene isophthalamide, polyhexamethylene tere-co-isophthalamide and polyhexamethylene dodecanoamide (nylon 612), the polyamide produced by ring opening of lactams, i.e., polycaprolactam, polylauric lactam, poly-11-aminoundecanoic acid, bis(paraaminocyclohexyl) methane dodecanoamide. It is also possible to use in this invention polyamides prepared by the copolymerization of two of the above polymers or terpolymerization of the above polymers or their components, for example, an adipic isophthalic acid hexamethylene diamine copolymer. Preferably the polyamides are linear with a melting point in excess of 200 °C. In the three preferred embodiments of the present invention stated hereinbefore, as great as 95 per cent by weight of the composition can be composed of polyamide; however, preferred compositions contain from 60 to 95 per cent, more narrowly 70 to 95 per cent, and in particular from 80 to 95 per cent by weight of polyamide.

The polyolefins employed in the present invention as component (b) are crystalline or crystallizable poly(alpha-olefins) and their copolymers. The alpha-olefin or 1-olefin monomers employed in the instant invention, both have 2 to 5 carbon atoms per molecule. Examples of particular useful polyolefins, both plastic and elastomeric, include low or high density polyethylene, polypropylene, poly(1-butene), poly-3-methyl-1-butene, poly-(4-methyl-1-pentene), copolymers of monoolefins with other olefins (mono- or diolefins) or vinyl monomers such as ethylene-propylene copolymers or with one or more additional monomers, i.e., EPDM, ethylene/butylene copolymer, ethylene/vinyl acetate copolymer, ethylene/ethyl acrylate copolymer, propylene/4-methyl-1-pentene copolymer, ethylene/methacrylic acid, ethylene/acrylic acid and their ionomers and the like. The number average molecular weight of the polyolefins is preferably above about 10,000, more preferably above about 50,000. In addition, it is preferred that the apparent crystalline melting point be above about 100 °C, preferably between about 100 °C and about 250 °C, and more preferably between about 140 °C and about 250 °C. The preparation of these various polyolefins is well known. See generally "Olefin Polymers," Volume 14, Kirk-Othmer Encyclopedia of Chemical Technology, pages 217-335 (1967).

The high density polyethylene employed has an approximate crystallinity of over about 75% and a density in grams per cubic centimetre ($g/cm^3$) of between about 0.94 and 1.0 while the low density polyethylene employed has an approximate crystallinity of over about 35% and a density of between about 0.90 $g/cm^3$ and 0.94 $g/cm^3$. Most commercial polyethylenes have a number average molecular weight of about 50,000 to about 500,000.

The polypropylene employed is the so-called isotactic polypropylene as opposed to atactic polypropylene. This polypropylene is described in the above Kirk-Othmer reference and in U.S. patent specification No. 3,112,300. The number average molecular weight of the polypropylene employed is typically in excess of about 100,000. The polypropylene suitable for this invention may be prepared using methods of the prior art. Depending on the specific catalyst and polymerization conditions employed, the polymer produced may contain atactic as well as isotactic, syndiotactic or so-called stereo-block molecules. These may be separated, if desired, by selective solvent extraction to yield products of low atactic content that crystallize more completely. The preferred commercial polypropylenes are generally prepared using a solid, crystalline, hydrocarbon-insoluble catalyst made from a titanium trichloride composition and an aluminium-alkyl compound, e.g., triethylaluminium or diethylaluminium chloride. If desired, the polypropylene employed may be a copolymer containing minor (1 to 20 per cent by weight) amounts of ethylene or other alpha-olefin comonomers.

The poly(1-butene) preferably has an isotactic structure. The catalysts used in preparing the poly(1-butene) are typically organometallic compounds commonly referred to as Ziegler-Natta catalysts. A typical catalyst is the interacted product resulting from mixing equimolar quantities of titanium tetrachloride and triethylaluminum. The manufacturing process is normally carried out in an inert diluent such as hexane. Manufacturing operation, in all phases of polymer formation, is conducted in such a manner as to guarantee rigorous exclusion of water, even in trace amounts.

One very suitable polyolefin is poly(4-methyl-1-pentene). Poly(4-methyl-1-pentene) typically has an apparent crystalline melting point of between about 240° and 250°C and a relative density of between about 0.80 and 0.85. Monomeric 4-methyl-1-pentene is commercially manufactured by the alkali-metal catalyst dimerization of propylene. The homopolymerization of 4-methyl-1-pentene with Ziegler-Natta catalysts is described in the Kirk-Othmer Encyclopedia of Chemical Technology, Supplement volume, pages 789-792 (second edition, 1971). However, the isotactic homopolymer of 4-methyl-1-pentene has certain technical defects, such as brittleness and inadequate transparency. Therefore, commercially available poly(4-methyl-1-pentene) is actually a copolymer with minor proportions of other alpha-olefins, together with the addition of suitable oxidation and melt stabilizer systems. These copolymers are described in the Kirk-Othmer Encyclopedia of Chemical Technology, Supplement volume, pages 792-907 (second edition, 1971), and are available from Mitsui Chemical Company under the tradename TPX resin. Typical alpha-olefins are linear alpha-olefins having from 4 to 18 carbon atoms per molecule. Suitable resins are copolymers of 4-methyl-1-pentene with from about 0.5 to about 30% by weight of a linear alpha-olefin.

If desired, the polyolefin may be a mixture of various polyolefins. However, the much preferred polyolefin is isotactic polypropylene.

The polyolefins suitable as component (b) for use in the present invention can be modified by reacting a polyolefin with, for example, an unsaturated mono or polycarboxylic acid, or derivatives thereof.

The modified polyolefins are readily prepared according to the procedure described in U.S. patent specification 3,480,580 or 3,481,910. The polyolefins which can be modified are prepared from monoolefins containing at least 2 carbon atoms per molecule. Such polyolefins include homopolymers and copolymers of, for example, propylene, 1-butene, 4-methyl-1-pentene, 3-methyl-1-butene, 4,4-dimethyl-1-pentene, 3-methyl-1-pentene, 4-methyl-1-hexene, 5-ethyl-1-hexene, 6-methyl-1-heptene, 1-hexene, 1-heptene, 1-octene, 1-nonene, 1-decene, and 1-dodecene.

Examples of suitable polyolefins usable as component (b), both plastic and elastomeric, include low or high density polyethylene, polypropylene, poly-1-butene, poly-3-methyl-1-butene, poly-4-methyl-1-pentene, ethylene-propylene copolymers or with one or more additional monomers, for example, EPDM, ethylene-butylene copolymers, ethylene-vinyl acetate copolymers, ethylene/ethyl acrylate copolymers and propylene/4-methyl-1-pentene copolymers.

The reaction of the polyolefin, which for ease of reaction is generally a low viscosity polyolefin, with an unsaturated mono or polycarboxylic acid, and derivatives thereof, can be carried out in the presence of a free radical source. These homopolymeric or copolymeric low viscosity poly-$\alpha$-olefins are prepared by thermally degrading conventional high molecular weight $\alpha$-olefin polymers prepared by conventional polymerization processes. For example, one such suitable conventional polymer is the highly crystalline polypropylene prepared according to U.S. patent specification 2,969,345. Thermal degradation of conventional homopolymers or copolymers is accomplished by heating them at elevated temperatures causing the polymer chain to rupture apparently at the points of chain branching of the polymeric material. The degree of degradation is controlled by reaction time and temperature to give a thermally degraded low molecular weight crystallizable polymeric material having a melt viscosity range from about 100-5,000 cp. at 190°C (ASTMD12 38-57T using 0.04+0.0002 inch orifice) and an inherent viscosity of about 0.1 to 0.5, [Schulken and Sparks, Journal Polymer Science 26 227, (1957)]. By carefully controlling the time, temperature and agitation, a thermally degraded poly-α-olefin of relatively narrower molecular weight range than the starting high molecular weight polymer is obtained. The degradation is carried out at a temperature from 290°C to about 425°C.

The low viscosity poly-α-olefins are characterized by having a melt viscosity of less than about 100 to 5,000 cp. as measured at 190°C (ASTM-D12 38-57T using 0.04±0.0002 inch orifice). These low viscosity poly-α-olefins are reacted with unsaturated mono or polycarboxylic acids, and derivatives thereof, at temperatures generally less than 300°C, preferably from about 150°-250°C in the presence of free radical sources. Suitable free radical sources are, for example peroxides such as ditertiary butyl peroxide, tertiary butyl hydroperoxide, cumene hydroperoxide, p-menthane peroxide, p-menthane hydroperoxide compounds or azo compounds, such as azobis(isobutyronitrile), or irradiation sources. Suitable irradiation sources include, for example, those from cobalt, uranium and thorium, and ultraviolet light. Preferably, about 1 to 10 per cent organic unsaturated polycarboxylic acid, anhydride or esters thereof, based on the weight of the low viscosity polyolefin, can be used. The amount of peroxide or free radical agent used is generally quite low being of the order of about 0.01 to about 0.5 per cent based on the weight of the low viscosity poly-α-olefin. The reaction may be carried out either in a batchwise or in a continuous manner with contact times in the order of about 10 minutes to about 2 hours. Suitable unsaturated mono or polycarboxylic acids and derivatives thereof are described later in the section entitled Functionalized Block Copolymers and include maleic acid, maleic anhydride, fumaric acid, citaconic anhydride, aconitric anhydride, itaconic anhydride, the half or full esters derived from methyl, ethyl, dimethyl maleate, dimethyl fumarate, methyl ethyl maleate, dibutyl maleate, dipropyl maleate, and the like, or those compounds which form these compounds at elevated reaction temperatures such as citric acid, for example. These modified low molecular weight poly-α-olefin compositions have a melt viscosity of 100-5,000 centipoise at 190°C and a saponification number of from at least 6 to about 60, preferably about 7-30. It has been observed that the melt viscosity of the product increases slightly. This increase in melt viscosity may be due to a slight degree of crosslinking or to copolymerization of the wax material with maleic anhydride.

The reaction of the polyolefin can also be carried out in an extruder or a Banbury mixer. This process can be used for reacting polyolefins having a melt viscosity greater than 5,000 cp. at 190°C up to a viscosity of 500,000 cp. at 190°C. The modified polyolefins prepared in this manner, such as polypropylene, can have a melt viscosity of 150,000 or higher cp. at 190°C and a saponification number of up to 60.

One method for the determination of saponification number of maleated polypropylene is as follows: Weigh approximately 4g of the sample into a 500 ml alkali-resistant Erlenmeyer flask and add 1,000 ml distilled xylene. Heat under a reflux condenser for 1 hour. Cool the solution to 75°C or less, and add from a buret 30 ml standardized 0.10 N KOH in ethyl alcohol. Heat under reflux for 45 min. Cool, and add from a buret standardized 0.10 N $CH_3COOH$ in xylene until the mixture is acid to phenolphthalein. Add at least 1 ml excess $CH_3COOH$. Reheat the solution under reflux for 15 min. Remove from heat, add 5 ml water, and titrate to a faint pink end point with 0.10 N KOH in ethyl alcohol. Run a blank in this manner using the same amounts of reagents and the same heating times. Calculation:

$$\frac{\overbrace{(\text{ml.KOHxN})(\text{ml.}CH_3\text{COOHxN})}^{\text{For Sample}}-\overbrace{[(\text{ml.KOHxN})(\text{ml.}CH_3\text{COOHxN})]}^{\text{For Blank}}\times 56.1}{\text{g. Sample}} = \text{Sap. No.}$$

The unreacted, unsaturated polycarboxylic acid can be separated from the reaction mixture by purging the reaction mixture with an inert gas while the melt temperature is between 200° and 300°C. After the unreacted unsaturated polycarboxylic acid has been removed, the modified poly-α-olefin can be further purified by vacuum stripping, solvent extraction, or dissolving in a hydrocarbon medium and isolated by precipitation with a nonsolvent such as acetone.

It may be desirable to use an effective polyolefin stabilizer in order to prevent gelation or degradation of blend properties. Some suitable stabilizers include dilauryl thiodipropionate, butylated hydroxytoluene, dioctadecyl p-cresol, pentaerythritol tetrakis[3-(3,5-di-tert-butyl-4- hydroxyphenyl)propionate], dodecyl

stearyl thiodipropionate, 2,2'-methylene bis(6-tert-butyl-p-cresol) and the like or combinations of such stabilizers. Desirable stabilizer concentrations include about 0.05 to about 1.0 per cent of stabilizer, by weight, to the blend.

If desired, the functionalized polyolefin may be mixed with unfunctionalized polyolefins, for example, a highly functionalized polyolefin may be diluted with unfunctionalized polyolefin to improve properties or reduce cost.

Elastomeric olefin copolymers, which may or may not be functionalized, are also useful as component (b) in the present invention.

Elastomeric copolymers of ethylene, at least one $C_3$ to $C_6$ $\alpha$-monoolefin, and at least one nonconjugated diene are well known in the art. These copolymers have a substantially saturated hydrocarbon backbone chain which causes the copolymer to be relatively inert to ozone attack and oxidative degradation and have side-chain unsaturation available for sulphur curing.

These copolymers are conveniently prepared by copolymerizing the monomers in the presence of a coordination catalyst system such as diisobutylaluminium chloride and vanadium oxytrichloride. Copolymerization may be conducted in an inert solvent or in a slurry or particle form reactor. Details of their preparation are given, for example, in U.S. patent specifications 2,933,480; 2,962,451; 3,000,866; 3,093,620; 3,093,621; 3,063,973; 3,147,230; 3,154,528; 3,260,708; and M. Sittig, "Stereo Rubber and Other Elastomer Processes," Noyes Development Corporation, Park Ride, N.J., 1967.

Propylene is normally selected as the $\alpha$-monoolefin in preparing such copolymers because of its availability and for reasons of economics. Other lower $\alpha$-monoolefins, such as 1-butene, 1-pentene, and 1-hexene can be selected in place of or in addition to propylene in preparing elastomeric copolymers which are useful in practicing the invention. The term EPDM as used herein refers to the preferred copolymers of ethylene, propylene, and at least one nonconjugated diene.

An especially preferred class of EPDM is that in which the nonconjugated diene is monoreactive. Monoreactive nonconjugated dienes have one double bond which readily enters the copolymerization reaction with ethylene and propylene, and a second double bond which does not, to any appreciable extent, enter the copolymerization reaction. Copolymers of this class have maximum side chain unsaturation for a given diene content, which unsaturation is available for adduct formation. Gel content of these copolymers is also minimal since there is minimal cross-linking during copolymerization.

Monoreactive nonconjugated dienes which can be selected in preparing this preferred class of EPDM copolymer include linear aliphatic dienes of at least six carbon atoms which have one terminal double bond and one internal double bond, and cyclic dienes wherein one or both of the carbon-to-carbon double bonds are part of a carbocyclic ring. Of the linear dienes, copolymers of ethylene, propylene, and 1,4-hexadiene having an inherent viscosity of at least about 1.5 are especially preferred.

Classes of cyclic dienes useful in preparing the preferred class of EPDM copolymers for adduct formation include alkylidene bicycloalkenes, alkenyl bicycloalkenes, bicycloalkadienes, and alkenyl cycloalkenes. Representative of alkylidene bicycloalkenes are 5-alkylidene-2-norbornenes such as 5-ethylidene-2-norbornene and 5-methylene-2-norbornene. Representative of alkenyl bicycloalkenes are 5-alkenyl-2-norbornenes such as 5-(1′-propenyl)-2-norbornene, 5-(2′-butenyl)-2-norbornene, and 5-hexenyl-2-norbornene. Dicyclopentadiene and 5-ethyl-2,5-norbornadiene are illustrative of bicycloalkadienes, and vinyl cyclohexane is representative of alkenyl cycloalkenes which may be selected as the diene monomer. EPDM copolymers prepared from cyclic dienes preferably have an inherent viscosity within the range of about 1.5 to 3.0, as measured on 0.1 gram copolymer dissolved in 100 ml of perchloroethylene at 30°C, for optimum processing properties. Of the cyclic dienes, 5-ethylidene-2-norbornene is preferred.

Another class of preferred copolymers includes branched tetrapolymers made from ethylene, at least one $C_3$ to $C_6$ $\alpha$-monoolefin with propylene being preferred, at least one monoreactive nonconjugated diene, and at least one direactive nonconjugated diene such as 2,5-norbornadiene or 1,7-octadiene. By "direactive" is meant that both double bonds are capable of polymerizing during preparation of the copolymer. Tetrapolymers of this class preferably have an inherent viscosity of about 1.2 to 3.0, as measured on 0.1 gram copolymer dissolved in 100 ml of perchloroethylene at 30°C, for optimum processing properties. A preferred copolymer of this class is a tetrapolymer of ethylene, propylene, 1,4-hexadiene, and 2,5-norbornadiene. Such copolymers are described in Canadian patent specifications 855,774 and 897,895.

Copolymers of the classes defined above have low gel content, a substantially saturated hydrocarbon backbone which is resistant to ozone and oxidative degradation, and hydrocarbon side-chain unsaturation which presents sites for the thermal addition of maleic anhydride, fumaric acid, and other species capable of thermal addition to the above mentioned side-chain unsaturation. Low gel content is indicative of a polymer having favorable processing properties.

Although the present invention will be discussed in relationship to thermal addition of maleic anhydride to from a graft, it is understood that in the present invention maleic acid or fumaric acid may be directly substituted for maleic anhydride to form the same adduct. The adduct containing succinic groups attached to the elastomeric copolymer contains these groups with use of a starting material of maleic anhydride, maleic acid or fumaric acid. Maleic anhydride, maleic acid and fumaric acid are equivalents to one another to produce the same type of graft containing the same succinic groups. Therefore, the remarks made herein in use of maleic anhydride also refer to maleic acid and fumaric acid. Also, the use of other thermal reactions with this hydrocarbon side-chain unsaturation may be used for the present invention.

Using a copolymer of ethylene, propylene, and 1,4-hexadiene, thermal addition of maleic anhydride to the copolymer is theorized to occur by the following equation:

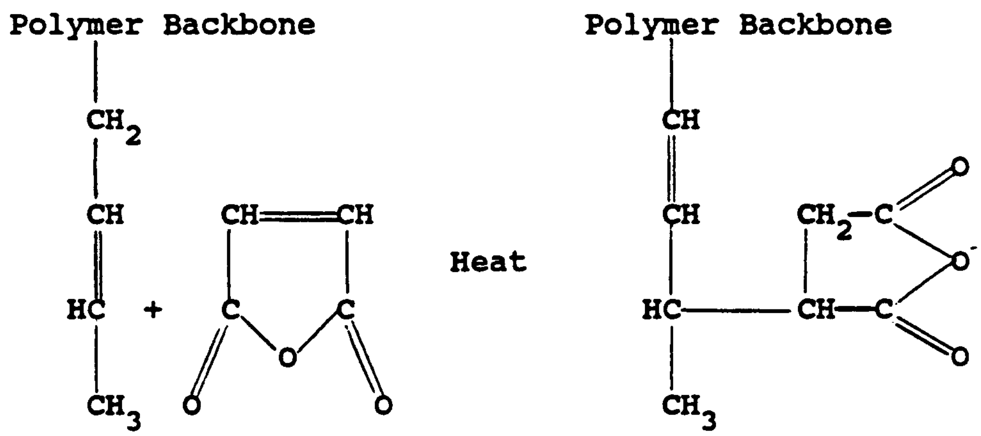


A molecule of maleic anhydride adds to the polymer at the site of side chain unsaturation to give a succinic anhydride radical bonded to the side chain. Said chain unsaturation shifts by one carbon atom. It will be understood that side chain unsaturation can also shift away from the backbone chain when the unsaturation is several carbon atoms removed from the terminal side chain carbon atom, as in copolymers of ethylene, propylene, and 1,4-octadiene.

However, it has been further found that in addition to the adduct containing succinic anhydride attached to the elastomeric copolymer, succinic acid groups can also be attached to the copolymer. Generally the adduct will contain succinic groups attached to the copolymer as a mixture of succinic anhydride and succinic acid.

In this disclosure "succinic groups" will include succinic anhydride, succinic acid or a combination of succinic anhydride and succinic acid.

The adducts of this invention can be prepared by any process which intimately mixes maleic anhydride with the copolymer without appreciable generation of free radicals, and which concurrently or subsequently heats the mixture to a temperature whereat thermal addition occurs. Selected temperatures will generally be at least 225° C to obtain adduct formation at acceptable rates and less than about 350° C to avoid any significant polymer breakdown. Preferred temperature ranges will vary with the particular polymer and can readily be determined by one skilled in the art.

Mixing of the maleic anhydride and copolymer can be by blending molten anhydride with copolymer in an internal mixer or extruder, or by blending finely divided dry maleic anhydride with copolymer on a well-ventilated rubber mill with concurrent or subsequent heating, such as in a hot press or mold. Temperatures necessary to achieve thermal grafting are sufficiently high to dehydrate maleic acid, forming maleic anhydride in situ. Thus, maleic acid can be compounded with the copolymer instead of maleic anhydride when such is desired. The maleic anhydride can be substituted with groups, such as bromine or chlorine, which do not unduly interfere with the graft reaction.

Preferred copolymers of ethylene, propylene, and 1,4-hexadiene are very resistant to free radical formation under high shear stress conditions and are readily mixed on conventional bulk processing equipment without gel formation. Care must be exercised, however, in selecting the mixing conditions for copolymers derived from strained ring dienes such as ethylidene norbornene. Such copolymers will readily generate free radicals when sheared at low temperatures, and are preferably mixed with maleic anhydride at high temperature, such as above 90° C to avoid appreciable gel formation.

It is generally desired to form adducts containing 0.02 to 20%, and preferably 0.1 to 10%, by weight maleic anhydride. Adducts containing such quantities of maleic anhydride have sufficient carboxylated sites

for ionic curing or grafting of the copolymer. To achieve a desired degree of adduct formation within a reasonable time, high concentrations of reactants are helpful. One will generally select a polymer having about twice the amount of side-chain unsaturation as is stoichiometrically required for the desired amount of maleic anhydride incorporation. Similarly, about twice as much maleic anhydride is added as is desired in the polymer adduct. Conversion of about 40 to 50% of the maleic anhydride will result in copolymer adduct having the desired composition. For example, if one desires to obtain an ethylene/propylene/1,4-hexadiene copolymer having 2.2 weight per cent maleic anhydride content, he could conveniently mix a copolymer having 0.49 mol side-chain unsaturation per kilogram of polymer with 0.49 mol maleic anhydride and heat the mixture to convert 45% of the anhydride, thereby obtaining the desired product.

It is often desirable to perform further reactions on the derivatized elastomeric olefin copolymer. For example, a copolymer containing succinic groups may be esterified with hydroxy-containing compounds.

Block copolymers of conjugated dienes and vinyl aromatic hydrocarbons to be utilized as component (c) include any of those which exhibit elastomeric properties and those which have 1,2-microstructure contents prior to hydrogenation of from about 7% to about 100%, preferably in the range of from 35 to 55%, more preferably 35 to 50% and in particular from 40 to 50%. Such block copolymers may be multiblock copolymers of varying structures containing various ratios of conjugated dienes to vinyl aromatic hydrocarbons including those containing up to about 60 per cent by weight of vinyl aromatic hydrocarbon. Thus, multiblock copolymers may be utilized which are linear or radial, symmetric or asymmetric and which have structures represented by the formula $B_n(AB)_oA_p$ in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A constitute in the range of from 5 to 95 per cent by weight of the copolymer, the unsaturation of block B is less than 20% of the original unsaturation and the unsaturation of the blocks A is above 50% of the original unsaturation.

The block copolymers may be produced by any well known block polymerization or copolymerization procedures including the well known sequential addition of monomer techniques, incremental addition of monomer technique or coupling technique as illustrated in, for example, U.S. patent specifications 3,251,905; 3,390,207; 3,598,887 and 4,219,627. As is well known in the block copolymer art, tapered copolymer blocks can be incorporated in the multiblock copolymer by copolymerizing a mixture of conjugated diene and vinyl aromatic hydrocarbon monomers utilizing the difference in their copolymerization reactivity rates. Various patent specifications describe the preparation of multiblock copolymers containing tapered copolymer blocks including U.S. patent specifications 3,251,905; 3,265,765; 3,639,521 and 4,208,356 the disclosures of which are incorporated herein by reference.

Conjugated dienes which may be utilized to prepare the polymers and copolymers are those having from 4 to 8 carbon atoms per molecule and include for example 1,3-butadiene, 2-methyl-1,3-butadiene (isoprene), 2,3-dimethyl-1,3-butadiene, 1,3-pentadiene, and 1,3-hexadiene. Mixtures of such conjugated dienes may also be used. The preferred conjugated diene is 1,3-butadiene.

Vinyl aromatic hydrocarbons which may be utilized to prepare copolymers include for example styrene, o-methylstyrene, p-methylstyrene, p-tert-butylstyrene, 1,3-dimethylstyrene, alpha-methylstyrene, vinylnaphthalene and vinylanthracene. The preferred vinyl aromatic hydrocarbon is styrene.

It should be observed that the above-described polymers and copolymers may, if desired, be readily prepared by the methods set forth hereinbefore. However, since many of these polymers and copolymers are commercially available, it is usually preferred to employ the commercially available polymer as this serves to reduce the number of processing steps involved in the overall process. The hydrogenation of these polymers and copolymers may be carried out by a variety of well established processes including hydrogenation in the presence of such catalysts as Raney Nickel, noble metals, for example platinum and palladium and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. patent specifications 3,113,986 and 4,226,952, the disclosures of which are incorporated herein by reference. The block copolymers (c) are hydrogenated in such a manner as to produce selectively hydrogenated block copolymers having a residual unsaturation content in the polydiene block B of from 0.5 to 20 per cent preferably less than 10 and in particular less than 5 per cent of their original unsaturation content prior to hydrogenation. It is preferred that an average of less than 10% of the monoalkenyl aromatic hydrocarbon units in block A are hydrogenated. It is, however, not excluded that an average from 25% to 50% of the monoalkenyl aromatic hydrocarbon units are hydrogenated. The average unsaturation of the hydrogenated block copolymer is preferably reduced to less than

20% of its original value.

Block A preferably has an average molecular weight in the range of from 4,000 to 60,000 and block B preferably has an average molecular weight in the range of from 35,000 to 150,000.

In general, any materials having the ability to react with the block copolymer in question, in free radical initiated reactions as described in U.S. patent specification 4,578,429, which is herein incorporated by reference, or thermal addition reactions are operable for the purposes of the invention.

Monomers may be polymerizable or nonpolymerizable, however, preferred monomers are nonpolymerizable or slowly polymerizing. U.S. patent specification 4,427,828 concerns block copolymers made by the thermal addition reaction. Free radically produced block copolymers and free radical methods are disclosed in U.S. patent applications 646,391; 646,389; and 657,294 which are herein incorporated by reference.

In free radical reactions the monomers must be ethylenically unsaturated in order to be graftable. It has been found that by grafting unsaturated monomers which have a slow polymerization rate the resulting graft copolymers contain little or no homopolymer of the unsaturated monomer and contain only short grafted monomer chains which do not phase separate into separate domains.

The class of preferred monomers which will form graft polymers within the scope of the present invention have one or more functional groups or their derivatives such as carboxylic acid groups and their salts, anhydrides, esters, imide groups, amide groups, acid chlorides and the like in addition to at least one point of unsaturation.

These functionalities can be subsequently reacted with other modifying materials to produce new functional groups. For example a graft of an acid-containing monomer could be suitably modified by esterifying the resulting acid groups in the graft with appropriate reaction with hydroxy-containing compounds of varying carbon atoms lengths. The reaction could take place simultaneously with the grafting or in a subsequent post modification reaction.

The grafted polymer will usually contain from 0.02 to 20, preferably 0.1 to 10, and most preferably 0.2 to 5 weight per cent of grafted portion, calculated on the total weight of component (c).

The preferred modifying monomers are unsaturated mono- and polycarboxylic-containing acids ($C_3$-$C_{10}$) with preferably at least one olefinic unsaturation, and anhydrides, salts, esters, ethers, amides, nitriles, thiols, thioacids, glycidyl, cyano, hydroxy, glycol, and other substituted derivatives from said acids.

Examples of such acids, anhydrides and derivatives thereof include maleic acid, fumaric acid, itaconic acid, citraconic acid, acrylic acid, glycidyl acrylate, cyanoacrylates, hydroxy $C_1$-$C_{20}$ alkyl methacrylates, acrylic polyethers, acrylic anhydride, methacrylic acid, crotonic acid, isocrotonic acid, mesaconic acid, angelic acid, maleic anhydride, itaconic anhydride, citraconic anhydride, acrylonitrile, methacrylonitrile, sodium acrylate, calcium acrylate, and magnesium acrylate.

Other monomers which can be used either by themselves or in combination with one or more of the carboxylic acids or derivatives thereof include $C_2$-$C_{50}$ vinyl monomers such as acrylamide, acrylonitrile and monovinyl aromatic compounds, for example styrene, chlorostyrenes, bromostyrenes, $\alpha$-methylstyrene and vinylpyridines.

Other monomers which can be used are $C_4$ to $C_{50}$ vinyl esters, vinyl ethers and allyl esters, such as vinyl butyrate, vinyl laurate, vinyl stearate and vinyl adipate, and monomers having two or more vinyl groups, such as divinylbenzene, ethylene dimethacrylate, triallyl phosphite, dialkylcyanurate and triallyl cyanurate.

The preferred monomers to be grafted to the block copolymers according to the present invention are maleic anhydride, maleic acid, fumaric acid and their derivatives. It is well known in the art that these monomers do not polymerize easily.

The block copolymer may also be grafted with a sulphonic acid or a derivative thereof.

Of course, mixtures of monomer can be also added so as to achieve graft copolymers in which the graft chains originate from at least two different monomers therein (in addition to the base polymer monomers).

The modified block selectively hydrogenated copolymer for blending according to the present invention may be prepared by any means known in the art, for example, graft-reacting an acid moiety or its derivative with an aromatic vinyl compound-conjugated diene compound block copolymer containing at least one polymer block AB mainly composed of a conjugated diene compound at least one polymer block BA mainly composed of an aromatic vinyl compound, wherein said graft reaction is carried out by melt or solution mixing said block copolymer and said acid moiety in the presence of a free radical initiator and wherein each A is a polymerized monoalkenyl aromatic hydrocarbon block having an average molecular weight of about 2,000 to 115,000; each B is a polymerized conjugated diene hydrocarbon block having an average molecular weight of about 20,000 to 450,000; the blocks A constitute 5-95 weight per cent of the copolymer; 40-55 mol per cent of the condensed butadiene units in block B have a 1,2-configuration; the unsaturation of

the block B is reduced to less than 10% of the original unsaturation; and the unsaturation of the A blocks is above 50% of the original unsaturation.

The toughened compositions of this invention can be prepared by melt blending, in a closed system, a polyamide, a polyolefin and an elastomer into a uniform mixture in a multi-screw extruder such as a Werner Pfleiderer extruder having generally 2-5 kneading blocks and at least one reverse pitch to generate high shear, or other conventional plasticating devices such as a Brabender, Banbury mill, or the like. Alternatively, the blends may be made by coprecipitation from solution, blending or by dry mixing together of the components followed by melt fabrication of the dry mixture by extrusion.

Another method of preparing the blend would be to functionalize the selectively hydrogenated block copolymer (c) in the presence of the polyolefin (b) as described hereinafter.

The impact resistant polymeric composition may be prepared by melt-blending from 1 per cent to 95 per cent by weight, preferably from 10 per cent to 70 per cent and particularly 15 per cent to 45 per cent of the polyamide, from 1 per cent to 95 per cent by weight, preferably from 10 to 70 per cent, more preferably from 15 to 65 per cent and particularly from 30 to 55 per cent of a polyolefin, and from 1 per cent to 50 per cent by weight preferably from 15 per cent to 35 per cent or more preferably 10 per cent to 25 per cent of an selectively hydrogenated block copolymer.

Particular suitable compositions contain in the range of from 10 to 70% by weight of component (a), in the range of from 10 to 70% by weight of component (b) and in the range of from 1 to 50% by weight of component (c), the sum of the percentages of components (a), (b) and (c) being 100 and component (c) not being grafted with (i) an acid compound or a derivative of an acid compound and (ii) a polyolefin.

Further particularly suitable compositions according to the present invention comprise

in the range of from 40 to 90% by weight of component (a),

in the range of from 5 to 30% by weight of component (b),

in the range of from 5 to 30% by weight of component (c), and

in the range of from 0 to 50% by weight of a component (d) being a functionalized selectively hydrogenated block copolymer having the general formula I (see below) to which block copolymer has been grafted an acid compound or a derivative of an acid compound, the percentages calculated on the total of the four components (a), (b), (c) and (d).

Component (d) is preferably present in these compositions in an amount in the range of from 5 to 30% by weight.

The invention further provides a grafted block copolymer comprising a selectively hydrogenated block copolymer having the general formula

$B_n(AB)_oA_p$ (I)

in which each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A consitutue in the range of from 5 to 95 per cent by weight of the copolymer, the unsaturation of block B is less than 20% of the original unsaturation and the unsaturation of the blocks A is above 50% of the original unsaturation, which block copolymer is grafted with (a) an acid moiety or a derivative thereof, and (b) a polyolefin.

The grafted block copolymer according to the present invention may be prepared by any means known in the art. A preferred method for the preparation of the grafted block copolymer comprises melt-mixing the following components:-

(a) a selectively hydrogenated block copolymer having the general formula I stated hereinbefore,

(b) an acid compound or a derivative of an acid compound and

(c) a polyolefin,

adding a free radical initiator, graft-reacting under free radical conditions and recovering graft block copolymer product.

The grafting reaction is initiated by a free-radical initiator which is preferably an organic peroxygen compound. Especially preferred peroxides are 2,5-dimethyl-2,5-di(t-butylperoxy)hexane, di-t-butyl peroxide, 2,5-dimethyl-2,5-di-tert-butylperoxy-3-hexyne (known under the trade mark Lupersol 130), $\alpha,\alpha'$-bis(tert-butylperoxy)diisopropylbenzene (known under the trade mark VulCup R), or any free radical initiator having a short half-life under the base polymer processing conditions; see Modern Plastics, November 1971, pages 66 and 67, for more initiators.

The concentration of the initiator used to prepare the polymer may also vary between wide limits and is

determined by the desired degree of functionality and degradation allowable. Typical concentrations range from about 0.001 weight per cent to about 5.0 weight per cent, more preferably between 0.01 and 1.0 weight per cent.

Reaction temperatures and pressures should be sufficient to melt the reactants and also sufficient to thermally decompose the free radical initiator to form the free radical. Reaction temperatures would depend on the base polymer being used and the free radical initiator being used. Typical reaction conditions can be obtained by using a screw type extruder to mix and melt the reactants and to heat the reactant mixture to the desired reaction temperature.

The temperatures useful in the reaction of the process of the present invention may vary between wide limits such as from +75 °C to 450 °C, preferably from about 200 °C to about 300 °C.

The process according to the invention is highly flexible and a great many modifications such as those proposed hereinbefore are available to carry out any particular purposes desired.

The toughened compositions of this invention can be prepared by melt blending, in a closed system, a polyamide, and a mixture of a polyolefin and at least one modified block copolymer into a uniform mixture in a multi-screw extruder such as a Werner Pfleiderer extruder having generally 2-5 kneading blocks and at least one reverse pitch to generate high shear, or other conventional plasticating devices such a a Brabender, Banbury mill, or the like. The polyolefin/modified block copolymer mixture may be prepared by simultatneously subjecting both components to the grafting reaction previously described or alterantively by post blending polyolefin and a modified block copolymer.

The impact resistant polymeric composition may be prepared by melt-blending from 1 and preferably from 3 per cent to 95 per cent by weight, preferably from 40 to 95 per cent, in particular from 60 per cent to 95 per cent; in the latter range preferably from 70 per cent to 95 per cent and in particular from 80 per cent to 95 per cent, for example 85 per cent to 95 per cent, of a polyamide having a number average molecular weight of at least 5,000, from 1 per cent to 50 per cent by weight, preferably from 5 to 30 per cent or more preferably from 10 to 25 per cent of a polyolefin, from 1 per cent to 50 per cent by weight, preferably from 5 per cent to 30 per cent or more preferably 10 per cent to 25 per cent of said block copolymer grafted with (a) an acid moiety or a derivative thereof, and (b) a polyolefin, and from 0 to 50 per cent by weight, preferably from 5-30 per cent or more preferably from 10-25 per cent by weight of a functionalized block copolymer, having the general formula $B_n(AB)_oA_p$ in which A, B, n, o and p have the meaning stated hereinbefore, which block copolymer is grafted with an acid moiety or a derivative thereof.

The compositions of the invention may be modified by one or more conventional additives such as heat stablizers, slip-agents, and inhibitors of oxidative, thermal, and ultraviolet light degradation; lubricants and mould release agents, colorants including dyes and pigments, fibrous and particulate fillers and reinforcements, nucleating agents, plasticizers, antistatic agents, flame retardants, preservation and processing aids. Flow promoters such as oils, low molecular weight resins, or other polymers can be included in the reaction mixture during the functionalization step.

The stabilizers can be incorporated into the composition at any stage in the preparation of the thermoplastic composition. Preferably the stabilizers are included early to preclude the initiation of degradation before the composition can be protected. Such stabilizers must be compatible with the composition.

The oxidative and thermal stabilizers useful in the materials of the present invention include those used in addition polymers generally. They include, for example, up to 1 per cent by weight, based on the weight of polyamide, of halides of Group 1 of the Periodic Table of the Elements, for example sodium, potassium, lithium and copper (I), for example chloride, bromide, iodide, and, further of sterically hindered phenols, hydroquinones, and varieties of substituted members of those groups and combinations thereof.

The ultraviolet light stabilizers, e.g., up to 2.0 per cent, based on the weight of polyamide, can also be those used in addition to polymers generally. Examples of ultraviolet light stabilizers include various substituted resorcinols, salicylates, benzotriazoles, benzophenones, and the like.

Suitable lubricants and mould release agents, e.g., up to 1.0 per cent, based on the weight of the composition, are stearic acid, stearic alcohol, stearamides, organic dyes such as nigrosine, pigments, e.g., titanium dioxide, cadmium sulfide, cadmium sulfide selenide, phthalocyamines, ultramarine blue, carbon black, etc. up to 50 per cent, based on the weight of the composition, of fibrous and particulate fillers and reinforcements, e.g., carbon fibres, glass fibres, amorphous silica, asbestos, calcium silicate, aluminium silicate, magnesium carbonate, kaolin, chalk, powdered quartz, mica, feldspar, etc.; nucleating agent, e.g., talc, calcium fluoride, sodium phenyl phosphinate, alumina, and finely divided polytetrafluoroethylene, etc.; plasticizers, up to about 20 per cent, based on the weight of the composition, e.g., dioctyl phthalate, dibenzyl phthalate, butyl benzyl phthalate, hydrocarbon oils, N-normal butyl benzene sulfonamide, ortho and para toluene ethyl sulfonamide, etc. The colorants (dyes and pigments) can be present in an amount of up

to about 5.0 per cent by weight, based on the weight of the composition.

It is to be emphasized that in the definition of the base polymer, substituted polymers are also included; thus, the backbone of the polymer before functionalization can be substituted with functional groups, for example chlorine, hydroxy, carboxy, nitrile, ester and amine.

Furthermore, polymers which have been functionalized, particularly those with functional carboxylic acid groups, can be additionally crosslinked in a conventional manner or by using metallic salts to obtain ionomeric crosslinking.

It is to be understood that in the specification and claims herein, unless otherwise indicated, when in connection with melt-blending, the amount of reactants is expressed in terms of per cent by weight it is meant per cent by weight based on the total amount of these materials which is employed in the melt-blending.

The following Examples further illustrate the invention not limiting it in any way, parts and percentages being by weight unless otherwise specifically noted. The Examples are according to the present invention, the Comparative Experiments are not. The moulded bars were tested using the following test procedures in the dry-as-moulded state:

Notched Izod toughness: at each end ASTM D-256-56
Flexural Modulus: ASTM D-790-58T

Examples 1-11 and Comparative Examples A-D

Preparation of Modified Block Copolymer by Melt Process

The block copolymer used to prepare modified polymer Y was KRATON G-1652 Rubber, a commercial S-EB-S material, which can be melt processed neat. This polymer was melt reacted with maleic anhydride and Lupersol 101 in a 30mm diameter corotating twin screw extruder. "Lupersol 101" is a trade name for 2,5-dimethyl-2,5-di(t-butylperoxy)hexane.

The reactants were premixed by tumbling in polyethylene bags, and then fed into the extruder. All extrusion conditions except for reactant concentrations were kept constant. The melt temperature was varied from 150 °C in the feed zone to 260 °C at the die. A screw speed of 350 rpm was used.

Samples prepared in the above manner were analyzed for bound maleic by extracting the soluble fraction in refluxing tetrahydrofuran, recovering the soluble fraction by precipitation of the extractant into isopropyl alcohol, and determining the maleic anhydride content of the dried precipitate by colorimetric titration with potassium methoxide and phenolphthalein indicator.

Table 1 shows the reactant concentrations examined, as well as analytical results for the material prepared.

TABLE 1

| Modified Polymer | Wt% Maleic Anhydride added | Wt% Lupersol 101 added | Wt% Maleic Anhydride grafted onto THF Solubles |
|---|---|---|---|
| Y | 3 | 0.10 | 1.6 |

Blending of N66 and Modified Block Copolymer

Prior to blending, the modified block copolymer was dried at 100 °C at sub-atmospheric pressure with a nitrogen purge for four hours. The thermoplastic polyamide used in this example was a commercial nylon 66 moulding grade having the trade name Zytel 101 and obtained from E.I. DuPont Company. Prior to all processing steps, the nylon 66 and its blends were dried at 120 °C for four hours at sub-atmospheric pressure with a nitrogen purge.

Blends of nylon 66 with both unmodified and modified block copolymer were prepared in a 30 mm diameter corotating twin screw extruder. The blend components were premixed by tumbling in polyethylene bags. A stabilizer package, 0.5wt% of the total material, made up of a 3:1 ratio of a phosphite and sterically hindered phenol antioxidant was included in the composition. The extruder melt temperature profile varied from 270 °C in the feed zone to 285 °C at the die. The screw rotated at 300 revolutions per minute (rpm). The extrudate was pelletized and injection moulded into test specimens.

In the following examples

Block copolymer 1 - S-EB-S 33% styrene M.W. 181,000
PP 5520 - Injection moulding grade propylene homopolymer from Shell Chemical
PP MA 0.16 and PP MA 1.0 Maleic anhydride grafted polypropylenes with functionalization given in weight percent.

Dry as moulded physical properties of blends exemplifying the present invention are given in Table 2.

TABLE 2

| Comparative Exp. | A | | | | | | B | C | D | | | | | | |
|---|---|---|---|---|---|---|---|---|---|---|---|---|---|---|---|
| Example | | 1 | 2 | 3 | 4 | 5 | | | | 6 | 7 | 8 | 9 | 10 | 11 |
| Nylon 66 | 40 | 40 | 40 | 40 | 40 | 40 | 50 | 50 | 50 | 50 | 50 | 55 | 55 | 75 | 75 |
| Block Copolymer 1 | 20 | 20 | -- | 10 | 10 | 20 | -- | -- | -- | -- | -- | -- | -- | -- | -- |
| Modified Block Copolymer Y | -- | -- | 20 | 10 | 10 | -- | -- | -- | -- | 20 | 20 | 10 | 10 | 5 | 5 |
| PP 5520 | 40 | -- | -- | 40 | -- | -- | 50 | -- | -- | 30 | -- | 35 | -- | 20 | -- |
| PP MA 0.16 | -- | 40 | 40 | -- | 40 | -- | -- | 50 | -- | -- | 30 | -- | 35 | -- | 20 |
| PP MA 1.0 | -- | -- | -- | -- | -- | 40 | -- | -- | 50 | -- | -- | -- | -- | -- | -- |
| Tested Dry as Moulded | | | | | | | | | | | | | | | |
| Notched Izod (J/m) | 64 | 144 | 908 | 304 | 1120 | 112 | 43 | 91 | 80 | 395 | 977 | 176 | 315 | 75 | 304 |
| Flexural Modulus ($MN/m^2$) | 1344 | 1269 | 703 | 1124 | 1151 | 1213 | 2062 | 1896 | 1662 | 1007 | 965 | 1779 | 1772 | 2462 | 2220 |
| Break Strength ($MN/m^2$) | 27.8 | 33.6 | 27.9 | 28.0 | 30.2 | 27.6 | 36.3 | 45.7 | 37.1 | 30.3 | 29.6 | 38.6 | 32.2 | 61.4 | 53.8 |
| Break Elongation (%) | 5.5 | 22.4 | 139 | 47 | 73 | 30 | 3.9 | 11.9 | 18.1 | 50 | 57 | 23 | 9 | 10 | 7 |

Examples 12 and 13

In the following examples Zytel ST 801, an EPDM-maleic anhydride/toughened nylon blend manufactured by duPont was used.

TABLE 3

| Example | 12 | 13 |
|---|---|---|
| ST 801 | 50 | 50 |
| Block Copolymer 1 | 10 | 10 |
| PP 5520 | 40 | -- |
| PP MA 0.16 | -- | 40 |
| Tested Dry As Moulded: | | |
| Notched Izod ($MN/m^2$) | 203 | 657 |
| Flexural Modulus ($MN/m^2$) | 1393 | 1282 |

Examples 14-16

In the following examples modified block copolymer Z is an S-EB-S block copolymer modified with maleic anhydride and polypropylene as described in US patent application 911,559 (K-4841). The ratio of polypropylene to block copolymer in the starting material was 1:3.

TABLE 4

| Examples | 14 | 15 | 16 |
|---|---|---|---|
| Nylon 66 | 40 | 40 | 40 |
| Modified Block Copolymer Z | 29 | 29 | 29 |
| PP 5520 | 31 | 16 | -- |
| PP MA 0.16 | -- | 15 | 31 |
| Tested Dry As Moulded: | | | |
| Notched Izod ($MN/m^2$) | 262 | 464 | 673 |
| Flexural Modulus ($MN/m^2$) | 1145 | 1089 | 1083 |

Comparative Experiments A-D and examples 1-11 show that in nylon blends containing polyolefins and block copolymers, when one or both of the polyolefin or block copolymers are functionalized, the balance of ultimate and low strain properties are significantly improved.

Examples 12 and 13 show that similar improved properties are obtained when the elastomer is maleic anhydride functionalized olefin copolymer.

Examples 14-16 show that improved properties can be also obtained by blending with a modified mixture of polyolefin and elastomer which has been prepared by simultaneously subjecting both components to a functionalization reaction.

EXAMPLES 17-30

The process can also be carried in the melt by the addition of a polyolefin flow promotor such as polypropylene. In addition, polymers or blends which are melt processable will benefit from the addition of a polyolefin flow promoter. The following Examples show that such a modified block copolymer processed with a polyolefin also toughens thermoplastic polyamides.

In one example a 3:1 ratio of a high molecular weight S-EB-S block copolymer which cannot be processed neat and homopolypropylene were simultaneously subjected to free radical grafting reaction conditions in an extruder as described in Examples 1-11. The resulting product was subjected to extraction with tetrahydrofuran and the fractions were analyzed by gel permeation chromatography, maleic anhydride

titration and by infrared spectroscopy. The product was found to contain block copolymer to which had been grafted maleic anhydride and homopolypropylene, block copolymer to which has been grafted maleic anhydride, homopolypropylene grafted with maleic anhydride along with minor amounts of scission products and crosslinked products.

The block copolymer used in the following was Kraton G 1651, a high molecular weight commercial SEBS copolymer. This polymer cannot be melt processed in the pure form. Various ratios of this polymer with various polyolefins were simultaneously put through the maleic anhydride melt modification process described in Examples 1-11. For these examples 0.2wt% Lupersol 101 initiator was used. Once again, all reactants were simply premixed by tumbling prior to feeding into the extruder. Table 5 gives a description of the polyolefins used.

TABLE 5

| Polyolefin | Manufacturer/ Supplier | Description |
|---|---|---|
| PP5520 | Shell | Injection Moulding Grade Propylene Homopolymer |
| PP5225 | Shell | Extrusion Grade Propylene Homopolymer |
| PP7522 | Shell | Impact Grade Propylene Copolymer |
| PB8010 | Shell | Developmental Polybutylene Copolymer |
| PB0200 | Shell | Polybutylene Homopolymer |
| Petrothene LB861 | U.S. Industries | Injection Moulding Grade High Density Polyethylene |
| Petrothene NA202 | U.S. Industries | Injection Moulding Grade Low Density Polyethylene |
| Alathon 3445 | DuPont | Extrusion Grade EVA Copolymer |

Blends of Nylon 66 with the melt modified Kraton G-1651 block copolymers described above were prepared in the manner described in Examples 1-11. Dry as moulded physical properties of these blends are given in Tables 6 and 7.

The examples show that blends of a thermoplastic polyamide with modified block copolymers in which polyolefins are added retain impact strength and show an increase in flexural modulus over the corresponding blends without polyolefins.

The data in Table 6 shows that the concentration of block copolymer can be reduced to 5% by weight of the total blend while still retaining a good balance of stiffness and toughness.

TABLE 6

20% 3:1 KG-1651 Copolymer (15%): Polyolefin (5%)/80% Nylon 66

| Example | 17 | 18 | 19 | 20 | 21 | 22 | 23 | 24 |
|---|---|---|---|---|---|---|---|---|
| Polyolefin | PP5520 | PP5225 | PP7522 | PB8010 | PB0200 | LB861 | NA202 | Alathon 3445 |
| Room Temperature 0.32 cm Notched Izod (J/m) | 1090 | 1060 | 1050 | 1040 | 890 | 260 | 920 | 910 |
| -29 °C 0.32 cm Notched Izod (J/m) | 130 | 140 | 120 | 130/160* | 90/120* | 100 | 120/140* | 110 |
| Flexural Modulus ($MN/m^2$) | 2206 | 2117 | 2158 | 2041 | 2255 | 2324 | 2048 | 2055 |

30% 3:1 KG-1651 Copolymer: Polyolefin/70% Nylon 66

| | | | | | | | | |
|---|---|---|---|---|---|---|---|---|
| Polyolefin | PP5520 | PP5225 | PP7522 | PB8010 | PB0200 | LB861 | NA202 | Alathon 3445 |
| Room Temperature 0.32 cm Notched Izod (J/m) | 1110 | 1220 | 1140 | 1210 | 1030 | 770 | 980 | 990 |
| -29 °C 0.32 cm Notched Izod (J/m) | 230 | 380/520* | 270/320* | 520/660* | 130 | 120 | 190 | 190/220* |
| Flexural Modulus ($MN/m^2$) | 1786 | 1751 | 1793 | 1662 | 1813 | 2055 | 1751 | 1813 |

* A/B refers to values for pieces formed close to gate (A) and at dead end (B).

TABLE 7

Effect of Polyolefin Level

20% Modifier/80% Nylon 66

| | Example 25<br>3:1 KG-1651:PP5520 | Example 26<br>1:1 KG-1651:PP5520 | Example 27<br>1:3 KG-1651:PP5520 |
|---|---|---|---|
| Room Temperature 0.32 cm Notched Izod (J/m) | 1060 | 400 | 200 |
| -29 °C 0.32 cm Notched Izod (J/m) | 140/140 | 110/110 | 60/70 |
| -40 °C 0.32 cm Notched Izod (J/m) | 130/130 | 100/110 | 50/70 |
| Flexural Modulus ($MN/m^2$) | 2117 | 2351 | 2696 |

30% Modifier/70% Nylon 66

| | Example 28<br>3:1 KG-1651:PP5520 | Example 29<br>1:1 KG-1651:PP5520 | Example 30<br>1:3 KG-1651:PP5520 |
|---|---|---|---|
| Room Temperature 0.32 cm Notched Izod (J/m) | 1220 | 1050 | 160 |
| -29 °C 0.32 cm Notched Izod (J/m) | 380/520 | 120/130 | 60/80 |
| -40 °C 0.32 cm Notched Izod (J/m) | 200/220 | 110/130 | 64/64 |
| Flexural Modulus ($MN/m^2$) | 1751 | 2220 | 2248 |

## Claims

**Claims for the following Contracting States : BE, CH, DE, FR, GB, IT, LI, NL, SE**

**1.** An impact resistant polymeric composition characterized in that it comprises the following components:-

component (a) in the range of from 1 to 95 per cent by weight of a polyamide having a number average molecular weight of at least 5,000,

component (b) in the range of from 1 to 95 per cent by weight of a polyolefin, being a crystalline or crystallizable poly($\alpha$-olefin) or a copolymer thereof, and

component (c) in the range of from 1 to 50 per cent by weight of a selectively hydrogenated block copolymer having the general formula I:

$$B_n(AB)_oA_p \qquad (I)$$

in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A consitutue in the range of from 5 to 95 per cent by weight of the copolymer, the unsaturation of block B is less than 20% of the original unsaturation and the unsaturation of the blocks A is above 50% of the original unsaturation,

component (b) and/or component (c) being grafted with an an acid compound or a derivative of an acid compound and component (c) also optionally being grafted with a polyolefin, the sum of the percentages of components (a), (b) and (c) being 100.

**2.** A composition as claimed in claim 1 in which component (c) is grafted with (i) an acid compound or a derivative of an acid compound and (ii) a polyolefin, component (b) is not grafted with an acid compound or a derivative of an acid compound and the composition contains in the range of from 1 to 50 per cent by weight of the polyolefin of component (b).

**3.** A composition as claimed in claim 1 or 2 in which component (b) is an olefin copolymer.

**4.** A composition as claimed in claim 3 in which the olefin copolymer is a copolymer of ethylene, propylene and at least one non-conjugated diene.

**5.** A composition as claimed in claim 1 or 2 in which component (b) is an acrylic containing polymer.

**6.** A composition as claimed in claim 1 or 2 in which the block copolymer of the general formula I is a selectively hydrogenated styrene-butadiene-styrene block copolymer.

**7.** A composition as claimed in claim 6 in which block B has an unsaturation which is less than 5% of its original value, an average of less than 10% of the monoalkenyl aromatic hydrocarbon units in block A are hydrogenated blocks A and B have an average molecular weight in the range of from 4,000 to 60,000 and 35,000 to 150,000, respectively, and in the range of from 35% to 50% of the condensed butadiene units have 1,2-configuration.

**8.** A composition as claimed in any one of the preceding claims in which the acid compound grafted to component (b) and/or component (c) is a carboxylic acid.

**9.** A composition as claimed in claim 8 in which the carboxylic acid is maleic acid.

**10.** A composition as claimed in any one of the preceding claims in which component (b) is polypropylene, polybutylene, high density polyethylene, low density polyethylene or ethylene vinyl acetate copolymer.

**11.** A composition as claimed in any one of the preceding claims in which the polyamide of component (a) is polyhexamethylene adipamide.

**12.** A composition as claimed in any one of claims 1 to 10 in which the polyamide is polyhexamethylene sebacamide, polycaprolactam, polyhexamethylene isophthalamide, polyhexamethylene tere-co-isophthalamide or a mixture or a copolymer thereof.

**13.** A composition as claimed in any one of the preceding claims in which component (c) has a grafted portion of acid compound or derivative thereof in the range of from 0.02 to 20% by weight, calculated on component (c).

**14.** A composition as claimed in any one of the preceding claims in which component (b) is grafted with in the range of from 1 to 10% by weight, calculated on component (b), of acid compound or derivative thereof.

**15.** A composition as claimed in claim 1 and any one of claims 3 to 14 which comprises in the range of from 10 to 70% by weight of component (a), in the range of from 10 to 70% by weight of component (b), and in the range of from 1 to 50% by weight of component (c), the sum of the percentages of the three components (a), (b) and (c) being 100.

**16.** A composition as claimed in any one of claims 2 to 14 which comprises in the range of from 40 to 90% by weight of component (a), in the range of from 5 to 30% by weight of component (b), in the range of from 5 to 30% by weight of component (c), and in the range of from 0 to 50% by weight of a component (d) being a functionalized selectively hydrogenated block copolymer having the general formula I to which block copolymer has been grafted an acid compound or a derivative of an acid compound, the sum of the percentages of the four components (a), (b), (c) and (d) being 100.

**17.** A composition as claimed in claim 16 in which component (d) is present in an amount in the range of from 5 to 30% by weight.

**18.** A grafted block copolymer comprising a selectively hydrogenated block copolymer having the general formula I, which block copolymer is grafted with (a) an acid moiety or a derivative thereof, and (b) a polyolefin.

**19.** A process for the preparation of a grafted block copolymer as claimed in claim 18 which process comprises melt-mixing (a) a selectively hydrogenated block copolymer having the general formula I in claim 6, (b) an acid compound or a derivative of an acid compound and (c) a polyolefin, adding a free radical initiator, graft-reacting under free radical conditions and recovering graft block copolymer product.

**20.** A process for the preparation of an impact resistance polymeric composition which process comprises melt-mixing the following components:-

component (a) in the range of from 1 to 95 per cent by weight of a polyamide having a number average molecular weight of at least 5,000,

component (b) in the range of from 1 to 95 per cent by weight of a polyolefin, being a crystalline or crystallizable poly(α-olefin) or a copolymer thereof, and

component (c) in the range of from 1 to 50 per cent by weight of a selectively hydrogenated block copolymer having the general formula I:

$$B_n(AB)_oA_p \quad (I)$$

in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A consitutue in the range of from 5 to 95 per cent by weight of the copolymer, the unsaturation of block B is less than 20% of the original unsaturation and the unsaturation of the blocks A is above 50% of the original unsaturation,

component (b) and/or component (c) being grafted with an acid compound or a derivative of an acid compound and component (c) also optionally being grafted with a polyolefin, the sum of the percentages of components (a), (b) and (c) being 100.

**Claims for the following Contracting States : AT, ES**

1. Process for preparation of an impact resistant polymeric composition characterized in that it comprises mixing the following components:-

component (a) in the range of from 1 to 95 per cent by weight of a polyamide having a number average molecular weight of at least 5,000,

component (b) in the range of from 1 to 95 per cent by weight of a polyolefin, being a crystalline or crystallizable poly($\alpha$-olefin) or a copolymer thereof, and

component (c) in the range of from 1 to 50 per cent by weight of a selectively hydrogenated block copolymer having the general formula I:

$$B_n(AB)_oA_p \quad (I)$$

in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A consitutue in the range of from 5 to 95 per cent by weight of the copolymer, the unsaturation of block B is less than 20% of the original unsaturation and the unsaturation of the blocks A is above 50% of the original unsaturation,

component (b) and/or component (c) being grafted with an an acid compound or a derivative of an acid compound and component (c) also optionally being grafted with a polyolefin, the sum of the percentages of components (a), (b) and (c) being 100.

2. A process as claimed in claim 1 in which a component (c) is used which is grafted with (i) an acid compound or a derivative of an acid compound and (ii) a polyolefin, component (b) is not grafted with an acid compound or a derivative of an acid compound and the composition contains in the range of from 1 to 50 per cent by weight of the polyolefin of component (b).

3. A process as claimed in claim 1 or 2 in which as component (b) an olefin copolymer is included.

4. A process as claimed in claim 3 in which the olefin copolymer is a copolymer of ethylene, propylene and at least one non-conjugated diene.

5. A process as claimed in claim 1 or 2 in which component (b) is an acrylic containing polymer.

6. A process as claimed in claim 1 or 2 in which the block copolymer of the general formula I is a selectively hydrogenated styrene-butadiene-styrene block copolymer.

7. A process as claimed in claim 6 in which the included block B has an unsaturation which is less than 5% of its original value, an average of less than 10% of the monoalkenyl aromatic hydrocarbon units in block A are hydrogenated blocks A and B have an average molecular weight in the range of from 4,000 to 60,000 and 35,000 to 150,000, respectively, and in the range of from 35% to 50% of the condensed butadiene units have 1,2-configuration.

8. A process as claimed in any one of the preceding claims in which the applied acid compound grafted to component (b) and/or component (c) is a carboxylic acid.

9. A process as claimed in claim 8 in which the carboxylic acid grafted to component (b) and/or component (c) is maleic acid.

10. A process as claimed in any one of the preceding claims in which component (b) is polypropylene, polybutylene, high density polyethylene, low density polyethylene or ethylene vinyl acetate copolymer.

11. A process as claimed in any one of the preceding claims in which the polyamide of component (a) is polyhexamethylene adipamide.

12. A process as claimed in any one of claims 1 to 10 in which the polyamide is polyhexamethylene

sebacamide, polycaprolactam, polyhexamethylene isophthalamide, polyhexamethylene tere-co-isophthalamide or a mixture or a copolymer thereof.

**13.** A process as claimed in any one of the preceding claims in which component (c) has a grafted portion of acid compound or derivative thereof in the range of from 0.02 to 20% by weight, calculated on component (c).

**14.** A process as claimed in any one of the preceding claims in which component (b) is grafted with in the range of from 1 to 10% by weight, calculated on component (b), of acid compound or derivative thereof.

**15.** A process as claimed in claim 1 and any one of claims 3 to 14 which comprises in the range of from 10 to 70% by weight of component (a), in the range of from 10 to 70% by weight of component (b), and in the range of from 1 to 50% by weight of component (c), the sum of the percentages of the three components (a), (b) and (c) being 100.

**16.** A process as claimed in any one of claims 2 to 14 which comprises in the range of from 40 to 90% by weight of component (a), in the range of from 5 to 30% by weight of component (b), in the range of from 5 to 30% by weight of component (c), and in the range of from 0 to 50% by weight of a component (d) being a functionalized selectively hydrogenated block copolymer having the general formula I to which block copolymer has been grafted an acid compound or a derivative of an acid compound, the sum of the percentages of the four components (a), (b), (c) and (d) being 100.

**17.** A process as claimed in claim 16 in which component (d) is present in an amount in the range of from 5 to 30% by weight.

**18.** A process for the preparation of a grafted block copolymer comprising a selectively hydrogenated block copolymer having the general formula I, which block copolymer is grafted with (a) an acid moiety or a derivative thereof and (b) a polyolefin, which process comprises melt-mixing (a) a selectively hydrogenated block copolymer having the general formula I in claim 1, (b) an acid compound or a derivative of an acid compound and (c) a polyolefin, adding a free radical initiator, graft-reacting under free radical conditions and recovering graft block copolymer product.

**19.** A process for the preparation of an impact resistance polymeric composition which process comprises melt-mixing the following components:-

component (a) in the range of from 1 to 95 per cent by weight of a polyamide having a number average molecular weight of at least 5,000,

component (b) in the range of from 1 to 95 per cent by weight of a polyolefin, being a crystalline or crystallizable poly($\alpha$-olefin) or a copolymer thereof, and

component (c) in the range of from 1 to 50 per cent by weight of a selectively hydrogenated block copolymer having the general formula I:

$$B_n(AB)_oA_p \quad (I)$$

in which formula each A is predominantly a polymerized monoalkenyl aromatic hydrocarbon block having an average molecular weight in the range of from 2,000 to 115,000, each B prior to hydrogenation is predominantly a polymerized conjugated diene hydrocarbon block having an average molecular weight in the range of from 20,000 to 450,000, n = 0 or 1, o is in the range of from 1 to 100 and p = 0 or 1, the blocks A consitutue in the range of from 5 to 95 per cent by weight of the copolymer, the unsaturation of block B is less than 20% of the original unsaturation and the unsaturation of the blocks A is above 50% of the original unsaturation,

component (b) and/or component (c) being grafted with an acid compound or a derivative of an acid compound and component (c) also optionally being grafted with a polyolefin, the sum of the percentages of components (a), (b) and (c) being 100.

**Patentansprüche**

**Patentansprüche für folgende Vertragsstaaten : BE, CH, DE, FR, GB, IT, LI, NL, SE**

1. Schlagzähe polymere Zusammensetzung, dadurch gekennzeichnet, daß sie die folgenden Komponenten umfaßt:

   Komponente (a) 1 bis 95 Gew.-% Polyamid mit einem Zahlenmittel-Molekulargewicht von wenigstens 5.000,

   Komponente (b) 1 bis 95 Gew.-% Polyolefin, wobei es sich um ein Kristallines oder kristallisierbares Poly($\alpha$-Olefin) oder ein Copolymer hievon handelt, und

   Komponente (c) 1 bis 50 Gew.-% selektiv hydriertes Blockcopolymer mit der allgemeinen Formel I:

   $$B_n(AB)_oA_p \quad (I),$$

   in welcher Formel jedes A überwiegend einen polymerisierten monoalkenylaromatischen Kohlenwasserstoffblock mit einem mittleren Molekulargewicht im Bereich von 2.000 bis 115.000 darstellt, jedes B vor der Hydrierung überwiegend einen polymerisierten konjugierten Dienkohlenwasserstoffblock mit einem mittleren Molekulargewicht im Bereich von 20.000 bis 450.000 darstellt, n 0 oder 1 ist, o im Bereich von 1 bis 100 liegt und p 0 oder 1 ist, die Blöcke A 5 bis 95 Gew.-% des Copolymers ausmachen, die Unsättigung des Blockes B weniger als 20% der ursprünglichen Unsättigung beträgt und die Unsättigung der Blöcke A über 50 % der ursprünglichen Unsättigung ausmacht,

   wobei die Komponenten (b) und/oder die Komponente (c) mit einer sauren Verbindung oder einem Derivat einer sauren Verbindung gepfropft sind und die Komponente (c) gewünschtenfalls auch mit einem Polyolefin gepfropft ist, und wobei die Summe der Prozentsätze der Komponenten (a), (b) und (c) 100 beträgt.

2. Zusammensetzung nach Anspruch 1, worin Komponente (c) mit (i) einer sauren Verbindung oder einem Derivat einer sauren Verbindung und (ii) einem Polyolefin gepfropft ist, Komponente (b) nicht mit einer sauren Verbindung oder einem Derivat einer sauren Verbindung gepfropft ist und die Zusammensetzung 1 bis 50 Gew.-% des Polyolefins der Komponente (b) enthält.

3. Zusammensetzung nach Anspruch 1 oder 2, worin die Komponente (b) ein Olefincopolymer ist.

4. Zusammensetzung nach Anspruch 3, worin das Olefincopolymer ein Copolymer aus Ethylen, Propylen und wenigstens einem nicht-konjugierten Dien ist.

5. Zusammensetzung nach Anspruch 1 oder 2, worin die Komponente (b) ein acrylhältiges Polymer ist.

6. Zusammensetzung nach Anspruch 1 oder 2, worin des Blockcopolymer der allgemeinen Formel I ein selektiv hydriertes Styrol-Butadien-Styrol-Blockcopolymer ist.

7. Zusammensetzung nach Anspruch 6, worin der Block B eine Unsättigung aufweist, die weniger als 5 % ihres ursprünglichen Wertes beträgt, im Mittel weniger als 10 % der monoalkenylaromatischen Kohlenwasserstoffeinheiten im Block A hydriert sind, die Blöcke A und B ein mittleres Molekulargewicht im Bereich von 4.000 bis 60.000 bzw. 35.000 bis 150.000 besitzen und 35 bis 50 % der kondensierten Butadieneinheiten 1,2-Konfiguration aufweisen.

8. Zusammensetzung nach einem der vorstehenden Ansprüche, worin die auf die Komponente (b) und/oder Komponente (c) aufgepfropfte saure Verbindung eine Carbonsäure ist.

9. Zusammensetzung nach Anspruch 8, worin die Carbonsäure Maleinsäure ist.

10. Zusammensetzung nach einem der vorstehenden Ansprüche, worin die Komponente (b) Polypropylen, Polybutylen, Polyethylen hoher Dichte, Polyethylen niederer Dichte oder ein Ethylen-Vinylacetatcopolymer ist.

11. Zusammensetzung nach einem der vorstehenden Ansprüche, worin das Polyamid der Komponente (a)

Polyhexamethylenadipamid ist.

**12.** Zusammensetzung nach einem der Ansprüche 1 bis 10, worin das Polyamid Polyhexamethylensebacinamid, Polycaprolactam, Polyhexamethylenisophthalamid, Polyhexamethylen-tere-co-isophthalamid oder ein Gemisch oder ein Copolymer hievon ist.

**13.** Zusammensetzung nach einem der vorstehenden Ansprüche, worin die Komponente (c) einen aufgepfropften Anteil aus saurer Verbindung oder einem Derivat hievon im Bereich von 0,02 bis 20 Gew.-%, berechnet auf die Komponente (c), aufweist.

**14.** Zusammensetzung nach einem der vorstehenden Ansprüche, worin die Komponente (b) mit 1 bis 10 Gew.-%, berechnet auf die Komponente (b), einer sauren Verbindung oder einem Derivat hievon gepfropft ist.

**15.** Zusammensetzung nach Anspruch 1 und einem der Ansprüche 3 bis 14, welche 10 bis 70 Gew.-% Komponente (a), 10 bis 70 Gew.-% Komponente (b) und 1 bis 50 Gew.-% Komponente (c) umfaßt, wobei die Summe der Prozentsätze der drei Komponenten (a), (b) und (c) 100 beträgt.

**16.** Zusammensetzung nach einem der Ansprüche 2 bis 14, welche 40 bis 90 Gew.-% Komponente (a), 5 bis 30 Gew.-% Komponente (b), 5 bis 30 Gew.-% Komponente (c) und 0 bis 50 Gew.-% einer Komponente (d), die ein funktionalisiertes selektiv hydriertes Blockcopolymer mit der allgemeinen Formel I ist, auf welches Blockcopolymer eine saure Verbindung oder ein Derivat einer sauren Verbindung gepfropft worden ist, umfaßt, wobei die Summe der Prozentsätze der 4 Komponenten (a), (b), (c) und (d) 100 beträgt.

**17.** Zusammensetzung nach Anspruch 16, worin die Komponente (d) in einer Menge im Bereich von 5 bis 30 Gew.-% vorliegt.

**18.** Gepfropftes Blockcopolymer mit einem Gehalt an einem selektiv hydrierten Blockcopolymer mit der allgemeinen Formel I, welches Blockcopolymer mit (a) einem sauren Rest oder einem Derivat hievon und (b) einem Polyolefin gepfropft ist.

**19.** Verfahren zur Herstellung eines gepfropften Blockcopolymers nach Anspruch 18, welches Verfahren ein Schmelzmischen von (a) einem selektiv hydrierten Blockcopolymer mit der allgemeinen Formel I in Anspruch 6, (b) einer sauren Verbindung oder einem Derivat einer sauren Verbindung und (c) einem Polyolefin, ein Zusetzen eines freiradikalischen Initiators, ein Pfropfregieren unter freiradikalischen Bedingungen und ein Gewinnen des gepfropften Blockcopolymerproduktes umfaßt.

**20.** Verfahren zur Herstellung einer schlagzähen polymeren Zusammensetzung, welches Verfahren ein Schmelzmischen der folgenden Komponenten umfaßt:

Komponente (a) 1 bis 95 Gew.-% Polyamid mit einem Zahlermittel-Molekulargewicht von wenigstens 5.000,

Komponente (b) 1 bis 95 Gew.-% Polyolefin, wobei es sich um ein kristallines oder kristallisierbares Poly($\alpha$-Olefin) oder ein Copolymer hievon handelt, und

Komponente (c) 1 bis 50 Gew.-% eines selektiv hydrierten Blockcopolymers mit der allgemeinen Formel I:

$$B_n(AB)_oA_p \qquad (I),$$

in welcher Formel jedes A überwiegend einen polymerisierten monoalkenylaromatischen Kohlenwasserstoffblock mit einem mittleren Molekulargewicht im Bereich von 2.000 bis 115.000 darstellt, jedes B vor der Hydrierung überwiegend einen polymerisierten konjugierten Dienkohlenwasserstoffblock mit einem mittleren Molekulargewicht im Bereich von 20.000 bis 450.000 darstellt, n 0 oder 1 ist, o im Bereich von 1 bis 100 liegt und p 0 oder 1 ist, die Blöcke A 5 bis 95 Gew.-% des Copolymers ausmachen, die Unsättigung des Blockes B weniger als 20 % der ursprünglichen Unsättigung beträgt und die Unsättigung der Blöcke A über 50 % der ursprünglichen Unsättigung ausmacht,

wobei die Komponenten (b) und/oder die Komponente (c) mit einer sauren Verbindung oder einem Derivat einer sauren Verbindung gepfropft sind und die Komponente (c) gewünschtenfalls auch mit einem Polyolefin gepfropft ist, und wobei die Summe der Prozentsätze der Komponenten (a), (b) und (c) 100 beträgt.

**Patentansprüche für folgende Vertragsstaaten : AT, ES**

1. Verfahren zur Herstellung einer schlagzähen polymeren Zusammensetzung, dadurch gekennzeichnet, daß es ein Vermischen der folgenden Komponenten umfaßt:

   Komponente (a) 1 bis 95 Gew.-% Polyamid mit einem Zahlenmittel-Molekulargewicht von wenigstens 5.000,

   Komponente (b) 1 bis 95 Gew.-% Polyolefin, wobei es sich um ein kristallines oder kristallisierbares Poly($\alpha$-Olefin) oder ein Copolymer hievon handelt, und

   Komponente (c) 1 bis 50 Gew.-% selektiv hydriertes Blockcopolymer mit der allgemeinen Formel I:

   $$B_n(AB)_oA_p \quad (I),$$

   in welcher Formel jedes A überwiegend einen polymerisierten monoalkenylaromatischen Kohlenwasserstoffblock mit einem mittleren Molekulargewicht im Bereich von 2.000 bis 115.000 darstellt, jedes B vor der Hydrierung überwiegend einen polymerisierten konjugierten Dienkohlenwasserstoffblock mit einem mittleren Molekulargewicht im Bereich von 20.000 bis 450.000 darstellt, n 0 oder 1 ist, o im Bereich von 1 bis 100 liegt und p 0 oder 1 ist, die Blöcke A 5 bis 95 Gew.-% des Copolymers ausmachen, die Unsättigung des Blockes B weniger als 20 % der ursprünglichen Unsättigung beträgt und die Unsättigung der Blöcke A über 50 % der ursprünglichen Unsättigung ausmacht,

   wobei die Komponenten (b) und/oder die Komponente (c) mit einer sauren Verbindung oder einem Derivat einer sauren Verbindung gepfropft sind und die Komponente (c) gewünschtenfalls auch mit einem Polyolefin gepfropft ist, und wobei die Summe der Prozentsätze der Komponenten (a), (b) und (c) 100 beträgt.

2. Verfahren nach Anspruch 1, worin eine Komponente (c) eingesetzt wird, die mit (i) ether sauren Verbindung oder einem Derivat einer sauren Verbindung und (ii) einem Polyolefin gepfropft ist, Komponente (b) nicht mit einer sauren Verbindung oder einem Derivat einer sauren Verbindung gepfropft ist und die Zusammensetzung 1 bis 50 Gew.-% des Polyolefins der Komponente (b) enthält.

3. Verfahren nach Anspruch 1 oder 2, worin als Komponente (b) ein Olefincopolymer eingebracht wird.

4. Verfahren nach Anspruch 3, worin das Olefincopolymer ein Copolymer aus Ethylen, Propylen und wenigstens einem nicht-konjugierten Dien ist.

5. Verfahren nach Anspruch 1 oder 2, worin die Komponente (b) ein acrylhältiges Polymer ist.

6. Verfahren nach Anspruch 1 oder 2, worin das Blockcopolymer der allgemeinen Formel I ein selektiv hydriertes Styrol-Butadien-Styrol-Blockcopolymer ist.

7. Verfahren nach Anspruch 6, worin der Block B eine Unsättigung aufweist, die weniger als 5 % ihres ursprünglichen Wertes beträgt, im Mittel weniger als 10 % der monoalkenylaromatischen Kohlenwasserstoffeinheiten im Block A hydriert sind, die Blöcke A und B ein mittleres Molekulargewicht Bereich von 4.000 bis 60.000 bzw. 35.000 bis 150.000 besitzen und 35 bis 50 % der kondensierten Butadieneinheiten 1,2-Konfiguration aufweisen.

8. Verfahren nach einem der vorstehenden Ansprüche, worin die auf die Komponente (b) und/oder Komponente (c) aufgepfropfte saure Verbindung eine Carbonsäure ist.

9. Verfahren nach Anspruch 8, worin die Carbonsäure Maleinsäure ist.

10. Verfahren nach einem der vorstehenden Ansprüche, worin die Komponente (b) Polypropylen, Polybutylen, Polyethylen hoher Dichte, Polyethylen niederer Dichte oder ein Ethylen-Vinylacetatcopolymer ist.

11. Verfahren nach einem der vorstehenden Ansprüche, worin das Polyamid der Komponente (a) Polyhexamethylenadipamid ist.

12. Verfahren nach einem der Ansprüche 1 bis 10, worin das Polyamid Polyhexamethylensebacinamid, Polycaprolactam, Polyhexamethylenisophthalamid, Polyhexamethylen-tere-co-isophthalamid oder ein Gemisch oder ein Copolymer hievon ist.

13. Verfahren nach einem der vorstehenden Ansprüche, worin die Komponente (c) einen aufgepfropften Anteil aus saurer Verbindung oder einem Derivat hievon im Bereich von 0,02 bis 20 Gew.-%, berechnet auf die Komponente (c), aufweist.

14. Verfahren nach einem der vorstehenden Ansprüche, worin die Komponente (b) mit 1 bis 10 Gew.-%, berechnet auf die Komponente (b), einer sauren Verbindung oder einem Derivat hievon gepfropft ist.

15. Verfahren nach Anspruch 1 und einem der Ansprüche 3 bis 14, worin die Zusammensetzung 10 bis 70 Gew.-% Komponente (a), 10 bis 70 Gew.-% Komponente (b) und 1 bis 50 Gew.-% Komponente (c) umfaßt, wobei die Summe der Prozentsätze der drei Komponenten (a), (b) und (c) 100 beträgt.

16. Verfahren nach einem der Ansprüche 2 bis 14, worin die Zusammensetzung 40 bis 90 Gew.-% Komponente (a), 5 bis 30 Gew.-% Komponente (b), 5 bis 30 Gew.-% Komponente (c) und 0 bis 50 Gew.-% einer Komponente (d), die ein funktionalisiertes selektiv hydriertes Blockcopolymer mit der allgemeinen Formel I ist, auf welches Blockcopolymer eine saure Verbindung oder ein Derivat einer sauren Verbindung gepfropft worden ist, umfaßt, wobei die Summe der Prozentsätze der 4 Komponenten (a), (b), (c) und (d) 100 beträgt.

17. Verfahren nach Anspruch 16, worin die Komponente (d) in einer Menge im Bereich von 5 bis 30 Gew.-% vorliegt.

18. Verfahren zur Herstellung eines gepfropften Blockcopolymers mit einem Gehalt an einem selektiv hydrierten Blockcopolymer mit der allgemeinen Formel I, welches Blockcopolymer mit (a) einem sauren Rest oder einem Derivat hievon und (b) einem Polyolefin gepfropft ist, welches Verfahren ein Schmelzmischen von (a) einem selektiv hydrierten Blockcopolymer mit der allgemeinen Formel I in Anspruch 1, (b) einer sauren Verbindung oder einem Derivat einer sauren Verbindung und (c) einem Polyolefin, ein Zusetzen eines freiradikalischen Initiators, ein Pfropfreagieren unter freiradikalischen Bedingungen und ein Gewinnen des gepfropften Blockcopolymerproduktes umfaßt.

19. Verfahren zur Herstellung einer schlagzähen polymeren Zusammensetzung, welches Verfahren ein Schmelzmischen der folgenden Komponenten umfaßt:

Komponente (a) 1 bis 95 Gew.-% Polyamid mit einem Zählenmittel-Molekulargewicht von wenigstens 5.000,

Komponente (b) 1 bis 95 Gew.-% Polyolefin, wobei es sich um ein kristallines oder kristallisierbares Poly($\alpha$-Olefin) oder ein Copolymer hievon handelt, und

Komponente (c) 1 bis 50 Gew.-% eines selektiv hydrierten Blockcopolymers mit der allgemeinen Formel I:

$$B_n(Ab)_oA_p \quad (I),$$

in welcher Formel jedes A überwiegend einen polymerisierten monoalkenylaromatischen Kohlenwasserstoffblock mit einem mittleren Molekulargewicht im Bereich von 2.000 bis 115.000 darstellt, jedes B vor der Hydrierung überwiegend einen polymerisierten konjugierten Dienkohlenwasserstoffblock mit einem mittleren Molekulargewicht im Bereich von 20.000 bis 450.000 darstellt, n 0 oder 1 ist, o im Bereich von 1 bis 100 liegt und p 0 oder 1 ist, die Blöcke A 5 bis 95 Gew.-% des Copolymers ausmachen, die Unsättigung des Blockes B weniger als 20 % der ursprünglichen Unsättigung beträgt und die Unsättigung der Blöcke A

über 50 % der ursprünglichen Unsättigung ausmacht,
wobei die Komponenten (b) und/oder die Komponente (c) mit einer sauren Verbindung oder einem Derivat einer sauren Verbindung gepfropft sind und die Komponente (c) gewünschtenfalls auch mit einem Polyolefin gepfropft ist, und wobei die Summe der Prozentsätze der Komponenten (a), (b) und (c) 100 beträgt.

**Revendications**
**Revendications pour les Etats contractants suivants : BE, CH, DE, FR, GB, IT, LI, NL, SE**

1. Composition polymère résistant aux chocs caractérisée en ce qu'elle comporte les composants suivants :
composant (a) : dans le domaine de 1 à 95% en poids d'un polyamide ayant un poids moléculaire moyen en nombre d'au moins 5 000,
composant (b) : dans le domaine de 1 à 95% en poids d'une polyoléfine celle-ci étant une poly(α-oléfine) cristalline ou cristallisable, ou un copolymère de celle-ci, et
composant (c) : dans le domaine de 1 à 50% en poids d'un copolymère séquencé hydrogéné de façon sélective ayant la formule générale I :

$B_n(AB)_oA_p$ (I)

et dans cette formule chaque A est de façon prédominante un bloc hydrocarboné aromatique monoalcényle polymérisé ayant un poids moléculaire moyen dans le domaine de 2 000 à 115 000, chaque B avant hydrogénation est de façon prédominante un bloc hydrocarboné de diène conjugué polymérisé ayant un poids moléculaire moyen dans le domaine de 20 000 à 450 000, n = 0 ou 1, o est dans le domaine de 1 à 100, et p = 0 ou 1, les blocs A sont présents dans le domaine de 5 à 95% en poids du copolymère, l'insaturation du bloc B est inférieure à 20% de l'insaturation originale, et l'insaturation des blocs A est supérieure à 50% de l'insaturation originale,
le composant (b) et/ou le composant (c) étant greffés avec un composé acide, ou un dérivé d'un composant acide, et le composant (c) étant aussi éventuellement greffé avec une polyoléfine, la somme des pourcentages des composants (a), (b) et (c) étant égale à 100.

2. Composition telle que revendiquée dans la revendication 1, où le composant (c) est greffé avec (i) un composé acide ou un dérivé d'un composé acide et (ii) une polyoléfine, le composant (b) n'est pas greffé avec un composé acide ou un dérivé d'un composé acide, et la composition contient dans le domaine de 1 à 50% en poids de la polyoléfine du composant (b).

3. Composition telle que revendiquée dans la revendication 1 ou 2, où le composé (b) est un copolymère oléfinique.

4. Composition telle que revendiquée dans la revendication 3, où le copolymère oléfinique est un copolymère d'éthylène, de propylène et d'au moins un diène non conjugué.

5. Composition telle que revendiquée dans la revendication 1 ou 2, où le composant (b) est un polymère contenant un acrylique.

6. Composition telle que revendiquée dans la revendication 1 ou 2, où le copolymère séquencé de formule générale I est un copolymère séquencé styrène-butadiène-styrène hydrogéné de façon sélective.

7. Composition telle que revendiquée dans la revendication 6, où le bloc B a une insaturation qui est inférieure à 5% de sa valeur originale, moins de 10% en moyenne des unités hydrocarbonées aromatiques monoalcényles dans le bloc A sont hydrogénées, les blocs A et B ont un poids moléculaire moyen dans le domaine de 4 000 à 60 000 et de 35 000 a 150 000, respectivement, et de 35% à 50% des unités de butadiène condensé ont une configuration en 1,2.

8. Composition telle que revendiquée dans l'une quelconque des revendications précédentes, où le composé acide greffé au composant (b) et/ou au composant (c) est un acide carboxylique.

9. Composition telle que revendiquée dans la revendication 8, où l'acide carboxylique est l'acide maléique.

10. Composition telle que revendiquée dans l'une quelconque des revendications précédentes, où le composant (b) est le polypropylène, le polybutylène, le polyéthylène à haute densité, le polyéthylène à basse densité ou un copolymère d'éthylène et d'acétate de vinyle.

11. Composition telle que revendiquée dans l'une quelconque des revendications précédentes, où le polyamide du composant (a) est le polyhexaméthylèneadipamide.

12. Composition telle que revendiquée dans l'une quelconque des revendications 1 à 10, où le polyamide est le polyhexaméthylènesébaçamide, le polycrapolactame, le polyhexaméthylèneisophtalamide, le polyhexaméthylènetéré-co-isophtalamide, ou un mélange ou un copolymère de ceux-ci.

13. Composition selon l'une quelconque des revendications précédentes, où le composant (c) a une portion greffée de composé acide, ou d'un dérivé de celui-ci, qui est dans le domaine de 0,02 à 20% en poids, calculé sur le composant (c).

14. Composition telle que revendiquée dans l'une quelconque des revendications précédentes, où le composant (b) est greffé dans le domaine de 1 à 10% en poids, calculé sur le composant (b), de composé acide ou d' un dérivé de celui-ci.

15. Composition telle que revendiquée dans la revendication 1 et dans l'une quelconque des revendications 3 à 14, qui comporte dans le domaine de 10 à 70% en poids du composant (a), dans le domaine de 10 à 70% en poids du composant (b), et dans le domaine de 1 à 50% en poids du composant (c), la somme des pourcentages des trois composants (a), (b) et (c) étant égale à 100.

16. Composition telle que revendiquée dans l'une quelconque des revendications 2 à 14, qui comporte dans le domaine 40 à 90% en poids du composant (a), dans le domaine de 5 à 30% en poids du composant (b), dans le domaine de 5 à 30% en poids du composant (c), et dans le domaine de 0 à 50% en poids d'un composant (d) qui est un copolymère séquencé fonctionnalisé, hydrogéné de façon sélective, ayant la formule générale I, un composé acide ou un dérivé d'un composé acide ayant été greffé sur ledit copolymère séquencé, la somme des pourcentages des quatre composants (a), (b), (c) et (d) étant égale à 100.

17. Composition telle que revendiquée dans la revendication 16, où le composant (d) est présent dans une quantité qui est dans le domaine de 5 à 30% en poids.

18. Copolymère séquencé greffé comportant un copolymère séquencé hydrogéné de façon sélective, ayant la formule générale I, ledit copolymère séquencé étant greffé avec (a) une portion acide ou un dérivé de celle-ci, et (b) une polyoléfine.

19. Procédé pour préparer un copolymère séquencé greffé tel que revendiqué dans la revendication 18, ledit procédé comportant le fait de mélanger à l'état fondu (a) un copolymère séquencé hydrogéné de façon sélective ayant la formule générale I de la revendication 6, (b) un composé acide ou un dérivé d'un composé acide et (c) une polyoléfine, le fait d'ajouter un initiateur de radicaux libres, le fait de faire réagir par greffage, dans des conditions de radicaux libres, et le fait de recueillir le produit copolymère séquencé greffé.

20. Procédé pour préparer une composition polymère résistant aux chocs, ledit procédé comportant le fait de mélanger à l'état fondu les composants suivants :
composant (a) : dans le domaine de 1 à 95% en poids d'un polyamide ayant un poids moléculaire moyen en nombre d'au moins 5 000,
composant (b) : dans le domaine de 1 à 95% en poids d'une polyoléfine, celle-ci étant une poly(α-oléfine) cristalline ou cristallisable, ou un copolymère de celle-ci, et
composant (c) : dans le domaine de 1 à 50% en poids d'un copolymère séquencé hydrogéné de façon sélective ayant la formule générale I :

$B_n(AB)_oA_p$ (I)

et dans cette formule chaque A étant de façon prédominante un bloc hydrocarboné aromatique monoalcényle polymérisé ayant un poids moléculaire moyen dans le domaine de 2 000 à 115 000, chaque B, avant hydrogénation, étant de façon prédominante un bloc hydrocarboné de diène conjugué polymérisé ayant un poids moléculaire moyen dans le domaine de 20 000 à 450 000, n étant égal à 0 ou 1, o étant dans le domaine de 1 à 100, et p étant égal à 0 ou 1, les blocs A étant présents dans le domaine de 5 à 95% en poids du copolymère, l'insaturation du bloc B étant inférieure à 20% de l'insaturation originale et l'insaturation des blocs A étant supérieure à 50% de l'insaturation originale, le composant (b) et/ou le composant (c) étant greffés avec un composé acide ou un dérivé d'un composé acide et le composant (c) étant aussi éventuellement greffé avec une polyoléfine, la somme des pourcentages des composants (a), (b) et (c) étant égale à 100.

**Revendications pour les Etats contractants suivants : AT, ES**

1. Procédé de préparation d'une composition polymère résistante au choc, caractérisé en ce qu'il comprend le mélange des composants suivants :

| | |
|---|---|
| composant (a) | dans la gamme de 1 à 95% en poids d'un polyamide ayant une masse moléculaire moyenne en nombre d'au moins 5 000 |
| composant (b) | dans la gamme de 1 à 95% en poids d'une polyoléfine, qui est une poly(α-oléfine) cristalline ou cristallisable, ou un de ses copolymères, et |
| composant (c) | dans la gamme de 1 à 50% en poids d'un copolymère séquencé sélectivement hydrogéné de formule générale I : |

$B_n(AB)_oA_p$ (I)

formule dans laquelle chaque A est principalement un bloc hydrocarboné monoalcényl-aromatique polymérisé ayant une messe moléculaire moyenne dans la gamme de 2 000 à 115 000, chaque B, avant l'hydrogénation, est principalement un bloc hydrocarboné diénique conjugué polymérisé ayant une masse moléculaire moyenne dans la gamme de 20 000 à 450 000, n = 0 ou 1, o est dans la gamme de 1 à 100 et p = 0 ou 1, les blocs A constituent de 5 à 95% en poids du copolymère, l'insaturation du bloc B est inférieure à 20% de l'insaturation initiale et l'insaturation des blocs A est supérieure à 50% de l'insaturation initiale,

le composant (b) et/ou le composant (c) étant greffés avec un composé acide ou un dérivé d'un composé acide et le composant (c) étant aussi éventuellement greffé avec une polyoléfine, la somme des pourcentages des composants (a), (b) et (c) étant égale à 100.

2. Procédé selon la revendication 1, dans lequel on utilise un composant (c) qui est greffé avec (i) un composé acide ou un dérivé d'un composé acide et (ii) une polyoléfine, un composant (b) qui n'est pas greffé avec un composé acide ou un dérivé d'un composé acide et la composition contient de 1 à 50% de composant (b), rapporté au poids de la polyoléfine.

3. Procédé selon la revendication 1 ou 2, dans lequel, comme composant (b), est incorporé un copolymère oléfinique.

4. Procédé selon la revendication 3, dans lequel le copolymère oléfinique est un copolymère d'éthylène, de propylène et d'au moins un diène non conjugué.

5. Procédé selon la revendication 1 ou 2, dans lequel le composant (c) est un polymère contenant une fonction acrylique.

6. Procédé selon la revendication 1 ou 2, dans lequel le copolymère séquencé de formule générale I est un copolymère séquencé styrène-butadiène-styrène sélectivement hydrogéné.

7. Procédé selon la revendication 6, dans lequel le bloc B incorporé a une insaturation qui est inférieure à 5% de sa valeur initiale, une moyenne de moins de 10% de motifs hydrocarbonés monoalcényl-aromatiques dans le bloc A est constituée de blocs hydrogénés, A et B ont une masse moléculaire moyenne respectivement dans la gamme de 4 000 à 60 000 et de 35 000 à 150 000 et de 35% à 50% des motifs butadiènes condensés ont une configuration 1,2.

**8.** Procédé selon l'une quelconque des revendications précédentes, dans lequel le composé acide employé, greffé sur le composant (b) et/ou le composant (c), est un acide carboxylique.

**9.** Procédé selon la revendication 8, dans lequel l'acide carboxylique greffé sur le composant (b) et/ou le composant (c) est l'acide maléique.

**10.** Procédé selon l'une quelconque des revendications précédentes, dans lequel le composant (c) est un polypropylène, un polybutylène, un polyéthylène haute densité, un polyéthylène basse densité ou un copolymère éthylène/acétate de vinyle.

**11.** Procédé selon l'une quelconque des revendications précédentes, dans lequel le polyamide du composant (a) est le polyhexaméthylène-adipamide.

**12.** Procédé selon l'une quelconque des revendications 1 à 10, dans lequel le polyamide est le polyhexaméthylène-sébaçamide, le polycaprolactame, le polyhexaméthylène-isophtalamide, le polyhexaméthylène-téré-co-isophtalamide ou un mélange ou un copolymère de ceux-ci.

**13.** Procédé selon l'une quelconque des revendications précédentes, dans lequel le composant (c) possède une partie greffée de composé acide ou d'un de ses dérivés, à raison de 0,02 à 20% en poids, calculée par rapport au composant (c).

**14.** Procédé selon l'une quelconque des revendications précédentes, dans lequel le composant (b) est greffé avec de 1 à 10% en poids, calculé par rapport au composant (b), d'un composé acide ou d'un de ses dérivés.

**15.** Procédé selon la revendication 1 et selon l'une quelconque des revendications 3 à 14, qui comprend de 10 à 70% en poids de composant (a), de 10 à 70% en poids de composant (b) et de 1 à 50% en poids de composant (c), la somme des pourcentages des trois composants (a), (b) et (c) étant égale à 100.

**16.** Procédé selon l'une quelconque des revendications 2 à 14, qui comprend de 40 à 90% en poids de composant (a), de 5 à 30% en poids de composant (b), de 5 à 30% en poids de composant (c) et de 0 à 50% en poids d'un composant (d) qui est un copolymère séquencé sélectivement hydrogéné, fonctionnalisé, de formule générale I, copolymère séquencé auquel a été greffé un composé acide ou un dérivé d'un composé acide, la somme des pourcentages des quatre composants (a), (b), (c) et (d) étant égale à 100.

**17.** Procédé selon la revendication 16, dans laquelle le composant (d) est présent en une quantité dans la gamme de 5 à 30% en poids.

**18.** Procédé de préparation d'un copolymère séquencé greffé comprenant un copolymère séquencé sélectivement hydrogéné de formule générale I, ce copolymère séquencé étant greffé avec (a) un groupement acide ou un de ses dérivés et (b) une polyoléfine, co procédé comprenant le mélange en fusion (a) d'un copolymère séquencé sélectivement hydrogéné de formule générale I selon la revendication 1, (b) d'un composé acide ou d'un dérivé d'un composé acide et (c) d'une polyoléfine, l'addition d'un initiateur de radicaux libres, la réaction de greffage, dans des conditions radicalaires, et la récupération du produit copolymère séquencé greffé.

**19.** Procédé de préparation d'une composition polymère résistante au choc, ce procédé comprenant le mélange en fusion des composants suivants :

| | |
|---|---|
| composent (a) | dans la gamme de 1 à 95% en poids d'un polyamide ayant une masse moléculaire moyenne en nombre d'au moins 5 000, |
| composant (b) | dans le gamme de 1 à 95% en poids d'une polyoléfine, qui est une poly(α-oléfine) cristalline ou cristallisable, ou un de ses copolymères, et |

composant (c) dans la gamme de 1 à 50% en poids d'un copolymère séquencé sélectivement hydrogéné de formule générale I :

$B_n(AB)_oA_p$ (I)

formule dans laquelle chaque A est principalement un bloc hydrocarboné monoalcényl-aromatique polymérisé ayant une masse moléculaire moyenne dans la gamme de 2 000 à 115 000, chaque B, avant l'hydrogénation, est principalement un bloc hydrocarboné diénique conjugué polymérisé ayant une masse moléculaire moyenne dans la gamme de 20 000 à 430 000, n = 0 ou 1, o est dans la gamme de 1 à 100 et p = 0 ou 1, les blocs A constituent de 5 à 95% en poids du copolymère, l'insaturation du bloc B est inférieure à 20% de l'insaturation initiale et l'insaturation des blocs A est supérieure à 50% de l'insaturation initiale,

le composant (b) et/ou le composant (c) étant greffés avec un composé acide ou un dérivé d'un composé acide et le composant (c) étant aussi éventuellement greffé avec une polyoléfine, la somme des pourcentages des composants (a), (b) et (c) étant égale à 100.